(19) **Europäisches Patentamt**
**European Patent Office**
**Office européen des brevets**

(11) **EP 4 407 914 A1**

(12) **EUROPEAN PATENT APPLICATION**
published in accordance with Art. 153(4) EPC

(43) Date of publication:
**31.07.2024 Bulletin 2024/31**

(21) Application number: **22882951.1**

(22) Date of filing: **20.10.2022**

(51) International Patent Classification (IPC):
**H04L 5/00** (2006.01)      **G06N 3/08** (2023.01)

(52) Cooperative Patent Classification (CPC):
**G06N 3/0464; G06N 3/08; H04B 17/327;**
**H04L 5/00; H04W 72/044; H04W 72/0446;**
**H04W 72/0453;** Y02D 30/70

(86) International application number:
**PCT/CN2022/126467**

(87) International publication number:
**WO 2023/066346 (27.04.2023 Gazette 2023/17)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **21.10.2021 CN 202111227090**

(71) Applicant: **Huawei Technologies Co., Ltd.**
**Shenzhen, Guangdong 518129 (CN)**

(72) Inventors:
- **CHAI, Xiaomeng**
  **Shenzhen, Guangdong 518129 (CN)**
- **WU, Yiqun**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **COMMUNICATION METHOD AND APPARATUS**

(57) The present disclosure provides a communication method and apparatus. The method includes: obtaining N pieces of training data, where for one of the N pieces of training data, the training data corresponds to one piece of mark information, and the mark information indicates an attribute of the training data; and sending indication information to a terminal device, where the indication information indicates information about M artificial intelligence models, the artificial intelligence model is trained based on X pieces of training data in the N pieces of training data, and the X pieces of training data are determined based on the mark information. According to the foregoing method, when the N pieces of training data are obtained, the N pieces of training data may be used for constructing training data corresponding to different mark information, to train the M artificial intelligence models or more artificial intelligence models. When the artificial intelligence model is trained, training data for training one artificial intelligence model meets mark information corresponding to the artificial intelligence model, so that scenario-based artificial intelligence model training can be implemented.

FIG. 4(e)

FIG. 5

## Description

### CROSS-REFERENCE TO RELATED APPLICATIONS

This application claims priority to Chinese Patent Application No. 202111227090.4, filed with the China National Intellectual Property Administration on October 21, 2021 and entitled "COMMUNICATION METHOD AND APPARATUS", which is incorporated herein by reference in its entirety.

### TECHNICAL FIELD

The present disclosure relates to the field of communication technologies, and in particular, to a communication method and apparatus.

### BACKGROUND

In a wireless communication network, for example, in a mobile communication network, services supported by a network are increasingly diversified, and therefore requirements that need to be met are increasingly diversified. For example, the network needs to be able to support ultra-high rates, ultra-low latency, and/or ultra-large connections. The feature makes network planning, network configuration, and/or resource scheduling more complex. In addition, because functions of the network are increasingly powerful, for example, a supported spectrum is increasingly high, a high-order multiple-input multiple-output (multiple-input multiple-output, MIMO) technology is supported, new technologies such as beamforming and/or beam management are supported. In this case, network energy saving becomes a hot research topic. These new requirements, new scenarios, and new characteristics bring an unprecedented challenge to network planning, operation and maintenance, and efficient operation. To confront the challenge, an artificial intelligence technology may be introduced into the wireless communication network, to implement network intelligence. Based on this, how to effectively implement artificial intelligence in the network is a problem worth studying.

### SUMMARY

The present disclosure provides a communication method and apparatus, to find how to construct a training dataset to obtain a better neural network through training.

According to a first aspect, the present disclosure provides a communication method. The method may be performed on a network device side, for example, an access network device side or an AI entity independent of an access network device. The method may be performed by using software, hardware, or a combination of the software and the hardware. For example, the method is performed by the access network device, or performed by a large device including the access network device, or performed by an electric circuit system, or performed by the AI entity independent of the access network device, where the electric circuit system can implement a function of the access network device. This is not limited. For example, the access network device is a base station. The method includes: obtaining N pieces of training data, where for one of the N pieces of training data, the training data corresponds to one piece of mark information, the mark information indicates an attribute of the training data, and N is an integer greater than 0; and sending indication information to a terminal device, where the indication information indicates information about M artificial intelligence models, for one of the M artificial intelligence models, the artificial intelligence model is trained based on X pieces of training data in the N pieces of training data, the X pieces of training data are determined based on the mark information, and M and X are integers greater than 0.

According to the foregoing method, when the N pieces of training data are obtained, the N pieces of training data may be used for constructing training data corresponding to different mark information, to train the M artificial intelligence models or more artificial intelligence models. When the artificial intelligence model is trained, training data for training one artificial intelligence model meets mark information corresponding to the artificial intelligence model, so that scenario-based artificial intelligence model training can be implemented. Scenario-based artificial intelligence models have more accurate inference performance in corresponding scenarios.

In a possible implementation, for the one of the M artificial intelligence models, the artificial intelligence model corresponds to one training condition, and mark information corresponding to the X pieces of training data used for training the artificial intelligence model meets the training condition corresponding to the artificial intelligence model, or attributes corresponding to the X pieces of training data meet the training condition corresponding to the artificial intelligence model.

When the artificial intelligence model is trained by using training data that is in the N pieces of training data and whose mark information meets the training condition, construction of training datasets corresponding to different training conditions is implemented, so that distributions of wireless channels corresponding to training data for training each artificial intelligence model are centralized or similar. When the artificial intelligence model is trained, the training data for training one artificial intelligence model meets the training condition corresponding to the artificial intelligence model, so that the scenario-based artificial intelligence model training can be implemented.

In a possible implementation, the mark information indicates at least one of the following attributes: an index of a synchronization signal block associated with the training data; reference signal received power of the synchronization signal block associated with the training data; a type of a wireless channel associated with the training data, where the type includes line of sight and non-line of sight; a timing advance associated with the training data; and a cell identifier of a cell associated with the training data.

The foregoing attributes are related to a wireless channel. Different training data is bound to the wireless channel based on the foregoing attributes, so that when the artificial intelligence model is trained, an appropriate scenario-based model can be adaptively selected based on the foregoing attributes.

In a possible implementation, the training condition includes at least one of the following: the index of the synchronization signal block; a value range of the reference signal received power; the type of the wireless channel; a value range of the timing advance; and the cell identifier.

One or more of the index of the synchronization signal block, the value range of the reference signal received power, the type of the wireless channel, and the value range of the timing advance are related to the wireless channel. When the training condition includes the foregoing information, required training data related to the wireless channel may be filtered out by using the training condition, to construct a scenario-based training dataset, to enable scenario-based model training.

In addition, when the training condition includes the cell identifier, each artificial intelligence model may be trained by using training data of a plurality of cells, to enable a scenario-based model in a multi-cell environment, so that the plurality of cells can share a same artificial intelligence model.

In a possible implementation, the training condition corresponding to the artificial intelligence model is preset.

In a possible implementation, the training condition corresponding to the artificial intelligence model is determined based on the X pieces of training data used for training the artificial intelligence model, and the X pieces of training data used for training the artificial intelligence model are training data that is in the N pieces of training data and that has a same clustering feature, or the X pieces of training data used for training the artificial intelligence model are training data that is in the N pieces of training data and whose clustering features are within a same range.

In a possible implementation, the method further includes: sending, to the terminal device, M training conditions corresponding to the M artificial intelligence models, where the M artificial intelligence models are in one-to-one correspondence with the M training conditions.

In a possible implementation, the sending indication information to a terminal device includes: receiving model indication information from the terminal device, where the model indication information indicates an artificial intelligence model requested by the terminal device; and sending the indication information to the terminal device, where the indication information indicates information about the artificial intelligence model requested by the terminal device. Optionally, the model indication information indicates: an index of the requested artificial intelligence model, a training condition of the requested artificial intelligence model, and an attribute or mark information of training data of the requested artificial intelligence model.

According to the foregoing method, the terminal device requests a required artificial intelligence model, so that a precise indication of the artificial intelligence model can be implemented, to avoid sending an artificial intelligence model that is not required by the terminal device, to reduce signaling overheads.

According to a second aspect, a communication method is provided. The method may be performed on a terminal device side. The method may be performed by using software, hardware, or a combination of the software and the hardware. For example, the method is performed by a terminal device, or performed by an electric circuit system, or performed by a large device including the terminal device, where the electric circuit system can implement a function of the terminal device. The method includes:

receiving indication information, where the indication information indicates information about M artificial intelligence models, for one of the M artificial intelligence models, the artificial intelligence model is trained based on X pieces of training data in N pieces of training data, and M, N, and X are integers greater than 0.

In a possible implementation, for one of the N pieces of training data, the training data corresponds to one piece of mark information, and the mark information indicates an attribute of the training data.

In a possible implementation, for the one of the M artificial intelligence models, the artificial intelligence model corresponds to one training condition, and mark information corresponding to the X pieces of training data meets the training condition corresponding to the artificial intelligence model.

For descriptions of the mark information, the training condition, and the like, refer to the first aspect. Details are not described herein again.

In a possible implementation, the method further includes: receiving M training conditions corresponding to the M artificial intelligence models, where the M artificial intelligence models are in one-to-one correspondence with the M training conditions.

In a possible implementation, the receiving indication information includes: sending model indication information, where the model indication information indicates a requested artificial intelligence model; and receiving the indication information, where the indication information indicates information about the requested artificial intelligence model.

For descriptions of the indication information, refer to the first aspect. Details are not described herein again.

According to a third aspect, this application further provides a communication apparatus. The communication apparatus has a function of implementing any method or any implementation provided in the first aspect. The communication apparatus may be implemented by using hardware, may be implemented by using software, or may be implemented by executing corresponding software by using hardware. The hardware or the software includes one or more units or modules corresponding to the foregoing function.

In a possible implementation, the communication apparatus includes: a processor, where the processor is configured to support the communication apparatus in performing the method according to the first aspect. The communication apparatus may further include a memory. The memory may be coupled to the processor, and the memory stores program instructions and data that are necessary for the communication apparatus. Optionally, the communication apparatus further includes an interface circuit, and the interface circuit is configured to support the communication apparatus in communicating with another communication apparatus.

In a possible implementation, a structure of the communication apparatus includes a processing unit and a communication unit. The units may perform corresponding functions in the foregoing method examples. For details, refer to the descriptions of the first aspect. Details are not described herein.

According to a fourth aspect, this application further provides a communication apparatus. The communication apparatus has a function of implementing any method or any implementation provided in the second aspect. The communication apparatus may be implemented by using hardware, may be implemented by using software, or may be implemented by executing corresponding software by using hardware. The hardware or the software includes one or more units or modules corresponding to the foregoing function.

In a possible implementation, the communication apparatus includes: a processor, where the processor is configured to support the communication apparatus in performing the method according to the second aspect. The communication apparatus may further include a memory. The memory may be coupled to the processor, and the memory stores program instructions and data that are necessary for the communication apparatus. Optionally, the communication apparatus further includes an interface circuit, and the interface circuit is configured to support the communication apparatus in communicating with another communication apparatus.

In a possible implementation, a structure of the communication apparatus includes a processing unit and a communication unit. The units may perform corresponding functions in the foregoing method examples. For details, refer to the descriptions of the method according to the second aspect. Details are not described herein.

According to a fifth aspect, a communication apparatus is provided, including a processor and an interface circuit. The interface circuit is configured to receive a signal from another communication apparatus other than the communication apparatus and transmit the signal to the processor, or send a signal from the processor to another communication apparatus other than the communication apparatus. The processor is configured to execute a computer program or instructions stored in a memory, to implement the method in any possible implementation of the first aspect. Optionally, the apparatus further includes the memory, and the memory stores the computer program or the instructions.

According to a sixth aspect, a communication apparatus is provided, including a processor and an interface circuit. The interface circuit is configured to receive a signal from another communication apparatus other than the communication apparatus and transmit the signal to the processor, or send a signal from the processor to another communication apparatus other than the communication apparatus. The processor is configured to execute a computer program or instructions stored in a memory, to implement the method in any possible implementation of the second aspect. Optionally, the apparatus further includes the memory, and the memory stores the computer program or the instructions.

According to a seventh aspect, a computer-readable storage medium is provided. The computer-readable storage medium stores a computer program or instructions; and when the computer program or the instructions are run on a computer, the computer is enabled to implement the method in any possible implementation of the first aspect.

According to an eighth aspect, a computer-readable storage medium is provided. The computer-readable storage medium stores a computer program or instructions; and when the computer program or the instructions are run on a computer, the computer is enabled to implement the method in any possible implementation of the second aspect.

According to a ninth aspect, a computer program product including computer-readable instructions is provided; and when the computer-readable instructions are run on a computer, the computer is enabled to implement the method in any possible implementation of the first aspect.

According to a tenth aspect, a computer program product including computer-readable instructions is provided;

and when the computer-readable instructions are run on a computer, the computer is enabled to implement the method in any possible implementation of the second aspect.

According to an eleventh aspect, a chip is provided. The chip includes a processor, and may further include a memory. The processor is coupled to the memory, and is configured to execute a computer program or instructions stored in the memory, to enable the chip to implement the method in any possible implementation of the first aspect.

According to a twelfth aspect, a chip is provided. The chip includes a processor, and may further include a memory. The processor is coupled to the memory, and is configured to execute a computer program or instructions stored in the memory, to enable the chip to implement the method in any possible implementation of the second aspect.

According to a thirteenth aspect, a communication system is provided. The system includes the apparatus (for example, an access network device) for implementing the first aspect and the apparatus (for example, a terminal device) for implementing the second aspect.

## BRIEF DESCRIPTION OF DRAWINGS

FIG. 1 is a schematic diagram of an architecture of a communication system to which the present disclosure may be applied;
FIG. 2 is a schematic diagram of an architecture of another communication system to which the present disclosure may be applied;
FIG. 3 is a schematic diagram of a relationship between layers of a neural network according to the present disclosure;
FIG. 4(a) to FIG. 4(e) are example diagrams of a network architecture to which a method according to the present disclosure may be applied;
FIG. 5 is a schematic flowchart of a configuration method according to the present disclosure;
FIG. 6 is a schematic diagram of transmission of a synchronization signal according to the present disclosure;
FIG. 7 is a schematic diagram of a structure of a communication apparatus according to the present disclosure; and
FIG. 8 is a schematic diagram of a structure of a communication apparatus according to the present disclosure.

## DESCRIPTION OF EMBODIMENTS

The following describes the present disclosure in detail with reference to the accompanying drawings in this specification.

The technical solutions in the present disclosure may be applied to various communication systems, for example, a long term evolution (long term evolution, LTE) system, a 5th generation (5th generation, 5G) mobile communication system, or a next generation mobile communication system. This is not limited herein. A 5G system may also be referred to as a new radio (new radio, NR) system.

In the present disclosure, interaction between a terminal device and an access network device is used as an example for description. It should be noted that, the method provided in the present disclosure may be applied not only to interaction between a terminal device and a network side, but also to interaction between any two devices. This is not limited in the present disclosure.

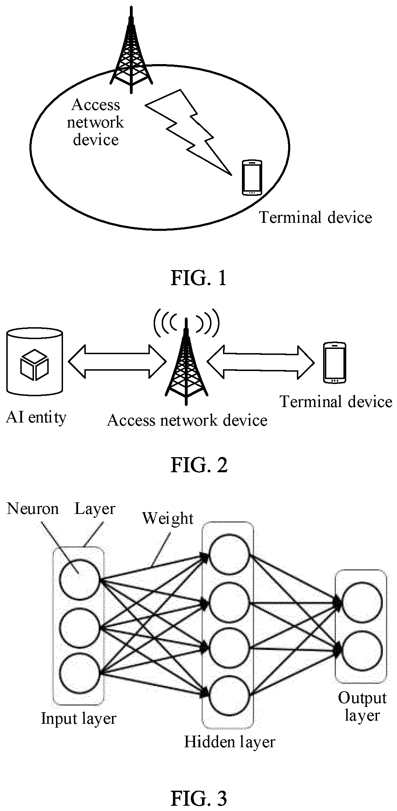

For ease of understanding the present disclosure, a communication system applicable to the present disclosure is first described in detail by using a communication system shown in FIG. 1 as an example. FIG. 1 is a schematic diagram of an architecture of a communication system to which the present disclosure may be applied. The communication system includes an access network device and a terminal device. The terminal device may establish a connection to the access network device, and communicate with the access network device. FIG. 1 is merely a schematic diagram. A quantity of access network devices and a quantity of terminal devices that are included in the communication system are not limited in the present disclosure.

In the present disclosure, the terminal device may be referred to as a terminal for short. The terminal device may communicate with one or more core networks through a radio access network (radio access network, RAN).

In the present disclosure, the terminal device may be a device having a wireless transceiver function or a chip that may be disposed in the device. The terminal device may also be referred to as user equipment (user equipment, UE), an access terminal, a subscriber unit, a subscriber station, a mobile station, a remote station, a remote terminal, a mobile device, a user terminal, a wireless communication device, a user agent, or a user apparatus. The terminal device in the present disclosure may be a mobile phone (mobile phone), a pad (Pad), a computer with a wireless transceiver function, a virtual reality (virtual reality, VR) terminal, an augmented reality (augmented reality, AR) terminal, a wearable device, a vehicle, an uncrewed aerial vehicle, a helicopter, aircraft, a ship, a robot, a robot arm, a smart home device, or the like. The terminal device in the present disclosure may be widely used in communication in various scenarios, for example, including but not limited to at least one of the following scenarios: enhanced mobile broadband (enhanced mobile broadband, eMBB), ultra-reliable low-latency communication (ultra-reliable low-latency communication, URLLC), device-to-device (device-to-device, D2D), vehicle to everything (vehicle to everything, V2X), machine-type communication (machine-type communication, MTC), massive machine-type communication (massive machine-type communication, mMTC), internet of things (internet of things, IoT), virtual reality, augmented reality, industrial control, autonomous driving, telemedicine, a smart grid, a smart furniture, a smart office, smart wearables, smart transportation, a smart city, or the like. A specific technology and a specific device form that are used by the terminal are not limited in the present disclosure.

In the present disclosure, an apparatus configured to implement a function of the terminal may be a terminal, or may be an apparatus that can support the terminal in implementing the function, for example, a chip system, a hardware circuit, a software module, or the hardware circuit plus the software module, where the apparatus may be installed in the terminal or may be used in a matching manner with the terminal. For ease of description, the following describes the technical solutions provided in the present disclosure by using an example in which the apparatus configured to implement the function of the terminal is the terminal.

The access network device may be a base station (base station), a NodeB (NodeB), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN, or open RAN), a next generation base station in a 6th generation (6th generation, 6G) mobile communication system, a base station in a future mobile communication system, an access node in a wireless fidelity (wireless fidelity, Wi-Fi) system, or the like. Alternatively, the access network device may be a module or unit that completes some functions of the base station, for example, may be a central unit (central unit, CU), a distributed unit (distributed unit, DU), a CU control plane (CU control plane, CU-CP) module, or a CU user plane (CU user plane, CU-UP) module. The access network device may be a macro base station, may be a micro base station or an indoor base station, or may be a relay node, a donor node, or the like. A specific technology and a specific device form that are used by the access network device are not limited in the present disclosure.

(1) Protocol layer structure

Communication between the access network device and the terminal complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as the PDCP layer, the RLC layer, the MAC layer, and the physical layer. In a possible implementation, a service data adaptation protocol (service data adaptation protocol, SDAP) layer may be further included above the PDCP layer.

Optionally, the protocol layer structure between the access network device and the terminal may further include an artificial intelligence (artificial intelligence, AI) layer, and the layer is used for transmitting data related to an AI function.

(2) Central unit (central unit, CU) and distributed unit (distributed unit, DU)

The access network device may include the CU and the DU. A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F1-U. Specific names of the interfaces are not limited in the present disclosure. The CU and the DU may be divided based on a protocol layer of a wireless network. For example, functions of the PDCP layer and protocol layers above the PDCP layer are configured on the CU, and functions of protocol layers (for example, the RLC layer and the MAC layer) below the PDCP layer are configured on the DU. For another example, functions of protocol layers above the PDCP layer are configured on the CU, and functions of the PDCP layer and protocol layers below the PDCP layer are configured on the DU. This is not limited.

Division of processing functions of the CU and the DU based on a protocol layer is merely an example, and the division may alternatively be performed in another manner. For example, the CU or the DU may be divided into functions that have more protocol layers. For another example, the CU or the DU may alternatively be divided into a part of processing functions of protocol layers. In a design, some functions of the RLC layer and functions of protocol layers above the RLC layer are configured on the CU, and remaining functions of the RLC layer and functions of protocol layers below the RLC layer are configured on the DU. In another design, division of functions of the CU or the DU may alternatively be performed based on service types or other system requirements. For example, the division may be performed based on latency. To be specific, functions whose processing time needs to meet a latency requirement are configured on the DU, and functions whose processing time does not need to meet the latency requirement are configured on the CU. In another design, the CU may alternatively have one or more functions of a core network. For example, the CU may be disposed on a network side for ease of centralized management. In another design, a radio unit (radio unit, RU) of the DU is disposed remotely. Optionally, the RU may have a radio frequency function.

Optionally, the DU and the RU may be divided at a physical layer (physical layer, PHY). For example, the DU may implement higher layer functions of the PHY layer, and the RU may implement lower layer functions of the PHY layer. When the PHY layer is used for sending, functions of the PHY layer may include at least one of the following: adding a cyclic redundancy check (cyclic redundancy check, CRC) bit, channel coding, rate matching, scrambling, modulation, layer mapping, precoding, resource mapping, physical antenna mapping, or a radio frequency sending function. When the PHY layer is used for receiving, the functions of the PHY layer may include at least one of the following: CRC, channel decoding, de-rate matching, descrambling, demodulation, layer demapping, channel detection, resource demapping, physical antenna demapping, or a radio frequency receiving function. The higher layer functions of the PHY layer may include a part of functions of the PHY layer. For example, the part of functions are closer to the MAC layer. The lower layer functions of the PHY layer may include another part of functions of the PHY layer. For example, the another part of functions of the PHY layer are closer to the radio frequency function. For example, the higher layer functions of the PHY layer may include adding CRC code, the channel coding, the rate matching, the scrambling, the modulation, and the layer mapping, and the lower layer functions of the PHY layer may include the precoding, the resource mapping, the physical antenna mapping, and the radio frequency sending function. Alternatively, the higher layer functions of the PHY layer may include the adding CRC code, the channel coding, the rate matching, the scrambling, the modulation, the layer mapping, and the precoding, and the lower layer functions of the PHY layer may include the resource mapping, the physical antenna mapping, and the radio frequency sending function. For example, the higher layer functions of the PHY layer may include the CRC, the channel decoding, the de-rate matching, decoding, the demodulation, and the layer demapping, and the lower layer functions of the PHY layer may include the channel detection, the resource demapping, the physical antenna demapping, and the radio frequency receiving function. Alternatively, the higher layer functions of the PHY layer may include the CRC, the channel decoding, the de-rate matching, the decoding, the demodulation, the layer demapping, and the channel detection, and the lower layer functions of the PHY layer may include the resource demapping, the physical antenna demapping, and the radio frequency receiving function.

For example, functions of the CU may be implemented by one entity, or may be implemented by different entities. For example, the functions of the CU may be further divided, in other words, a control plane and a user plane are separated and implemented by the different entities, including a control plane CU entity (namely, a CU-CP entity) and a user plane CU entity (namely, a CU-UP entity). The CU-CP entity and the CU-UP entity may be coupled to the DU to jointly complete a function of the access network device.

Optionally, any one of the DU, the CU, the CU-CP, the CU-UP, and the RU may be a software module, a hardware structure, or a combination of the software module and the hardware structure. This is not limited. The different entities may exist in different forms. This is not limited. For example, the DU, the CU, the CU-CP, and the CU-UP are software modules, and the RU is a hardware structure. The modules and a method performed by the modules also fall within the protection scope of the present disclosure.

In a possible implementation, the access network device includes the CU-CP, the CU-UP, the DU, and the RU. For example, the present disclosure is performed by the DU, or the DU and the RU, or the CU-CP, the DU, and the RU, or the CU-UP, the DU, and the RU. This is not limited. The methods performed by the modules also fall within the protection scope of the present disclosure.

In the present disclosure, an apparatus configured to implement the function of the access network device may be an access network device, or may be an apparatus that can support the access network device in implementing the function, for example, a chip system. The apparatus may be installed in the access network device or used in a matching manner with the access network device.

To support AI in the wireless network, a dedicated AI entity (which is also referred to as an AI module) may be further introduced in a network. An AI entity may correspond to an independent network element, or may be located inside a network element, where the network element may be a core network device, an access network device, OAM (operation, administration and maintenance, OAM), or the like. For example, as shown in FIG. 2, the AI entity is located outside the access network device, and may communicate with the access network device. The access network device may forward, to the AI entity, data that is related to an AI model and that is reported by the terminal device. The AI entity performs operations such as training dataset construction and model training, and forwards, via the access network device, a trained artificial intelligence model to each terminal device. In the present disclosure, the OAM is used for operating, managing, and/or maintaining the core network device (OAM of the core network device), and/or is used for operating, managing, and/or maintaining the access network device (OAM of the access network device). For example, the present disclosure includes first OAM and second OAM, where the first OAM is the OAM of the core network device, and the second OAM is the OAM of the access network device. The first OAM and/or the second OAM may include the AI entity. For another example, the present disclosure includes third OAM, where the third OAM is the OAM of both the core network device and the access network device.

Optionally, to match and support the AI, AI entities may be integrated into a terminal or a terminal chip.

Optionally, in the present disclosure, the AI entity may also have another name, and is mainly configured to implement an AI function (which is also referred to as an AI-related operation). A specific name of the AI entity is not limited in the present disclosure.

In the present disclosure, the AI model is a specific method for implementing the AI function, and the AI model represents a mapping relationship between an input and an output that are of a model. The AI model may be a neural network or another machine learning model. The AI model may be referred to as a model for short. The AI-related operation may include at least one of the following: data collection, model training, model information release, model inference (which is also referred to as model speculation or prediction), or inference result release.

The present disclosure is applicable to a scenario in which a network device trains the AI model by using training data. The training data may be collected by the terminal device and reported to the network device, or may be collected by the network device, or may be partially collected by the terminal device and reported to the network device, and partially collected by the network device. The training data may be any data, for example, downlink channel state information (channel state information, CSI) or a downlink received signal obtained by the terminal device. This is not limited. For example, before the access network device communicates with the terminal device, the access network device may determine CSI of a wireless channel between the access network device and the terminal device, to determine, based on the CSI, configuration parameters such as a resource for scheduling a downlink data channel of the terminal device, a modulation and coding scheme (modulation and coding scheme, MCS), and a precoding matrix. For example, for downlink communication, when the downlink CSI obtained by the access network device is more precise, scheduled downlink transmission can match a current downlink channel, and downlink transmission performance is better.

In a possible implementation, to obtain accurate downlink CSI, the terminal device may perform measurement to obtain the downlink CSI, and feed back obtained CSI to the access network device. To reduce overheads of CSI feedback, the terminal device may perform operations such as compression and/or quantization on CSI, and feed back compressed and/or quantized CSI to the terminal device. This causes a loss in precision of CSI that is fed back. To improve precision of downlink CSI feedback, an AI-based wireless network signal processing method may be used. To be specific, a pair of AI models are trained, and the terminal device compresses the downlink CSI by using an AI model A in the pair of AI models, and feeds back, to the access network device, compressed CSI output by the AI model A. Correspondingly, the access network device restores the compressed CSI by using an AI model B in the pair of AI models, to restore the downlink CSI. Optionally, the method may be applicable to a frequency division duplex (frequency division duplex, FDD) system or a time division duplex (time division duplex, TDD) system. This method is commonly applied to the FDD system.

In a possible implementation, based on uplink and downlink reciprocity, the access network device may measure uplink CSI, and use the uplink CSI as CSI of a downlink channel. Optionally, the method may be applicable to the FDD system or the time division duplex TDD system. This method is commonly applied to the TDD system.

Training data required for training AI models related to a wireless channel may be reported by the terminal device to the access network device or obtained by the access network device through measurement, and then the access network device or another network device (for example, a core network device, OAM, a server, or an AI node) that has a training function on a network side performs training based on the training data. When the training is implemented by the another network device, the access network device may send the training data to the another network device. Optionally, the training data may also be referred to as a training sample. Optionally, the AI model may also be referred to as a machine learning model.

The training data is an important part of machine learning. A model training process is essentially a process of learning features from the training data, so that an output of the AI model is as close as possible to a target output. For example, a difference between the output of the AI model and the target output is as small as possible. The target output may also be referred to as a tag. For example, the machine learning may include supervised learning, unsupervised learning, and reinforcement learning. Based on the training data and a data tag, the supervised learning uses a machine learning algorithm to learn a mapping relationship between the training data and the data tag, and uses the AI model to express the learned mapping relationship. An AI model training process is a process of learning the mapping relationship. The unsupervised learning uses, only based on the training data, an algorithm to autonomously mine an internal pattern of a sample. For example, in the unsupervised learning, a type of algorithm uses the training data as a supervised signal, that is, learns a mapping relationship between the training data and the training data. This is referred to as self-supervised learning. During training, a model parameter is optimized by calculating an error between a predicted value of a model and the sample. The reinforcement learning is an algorithm that learns, by interacting with an environment, a policy of solving problems. Different from the supervised learning and the unsupervised learning, the reinforcement learning does not have clear "correct" action tag data. The algorithm needs to interact with the environment to obtain a reward signal fed back by the environment, and adjust a decision action to obtain a larger reward signal value.

In the wireless network, because the model training has a high requirement on computing power, the model training is usually performed by a network side device (for example, an access network device, a core network device, OAM, a server, or an AI node), and optionally, the network side device sends information about a model obtained through training to the access network device, and then the access network device delivers the information about the trained model to the terminal device. For brevity of description, unless otherwise specified, the following describes the method by using an example in which the access network device performs model training.

To improve accuracy of the model, the access network device needs to collect a large amount of training data of one or more terminal devices. After collecting the training data of the one or more terminal devices, the access network device may construct a training dataset based on the training data.

In a possible implementation, the access network device forms all training data of all terminal devices into a hybrid dataset, trains a general model by using the hybrid dataset, and then broadcasts the general model to all terminal devices, so that all terminal devices use the general model. To consider various channel distributions, performance of the general model obtained through training in this manner is not optimal in each channel distribution.

To resolve the foregoing problem, the present disclosure proposes a method for training data collection and training dataset construction in the wireless network. A scenario-based training dataset is constructed for a training dataset related to the wireless channel. To be specific, training data with similar scenarios, that is, with similar channel distributions, is classified as one dataset, to divide and construct the scenario-based training dataset, to associate with a scenario-based artificial intelligence model. Optionally, in the present disclosure, the dataset may also be referred to as a sample set, and the training dataset may also be referred to as a training sample set.

Before the method in the present disclosure is described, some related knowledge about artificial intelligence is first briefly described. The artificial intelligence may enable a machine to have human intelligence. For example, the machine may use computer software and computer hardware to simulate some intelligent human behavior. To achieve the artificial intelligence, a machine learning method or many other methods may be used. For example, the machine learning includes a neural network. The neural network (neural network, NN) is a specific implementation of the machine learning. According to the universal approximation theorem, the neural network may approximate any continuous function in theory, so that the neural network has a capability of learning any mapping. Therefore, the neural network can accurately perform abstract modeling for a complex high-dimension problem. An idea of the neural network is from a neuron structure of brain tissue. Each neuron performs weighted summation on an input value of the neuron, and outputs a result of the weighted summation through an activation function. It is assumed that an input of the neuron is $x = [x_0, ..., x_n]$, a weight corresponding to the input is $w = [w_0, ..., w_n]$, and an offset of the weighted summation is b. Forms of the activation function may be diversified. It is assumed that an activation function of a neuron is $y = f(z) = \max(0, z)$. In this case, an output of the neuron is $y = f\left(\sum_{i=0}^{i=n} w_i * x_i + b\right) = \max\left(0, \sum_{i=0}^{i=n} w_i * x_i + b\right)$. For another example, an activation function of a neuron is $y = f(z) = z$. In this case, an output of the neuron is $y = f\left(\sum_{i=0}^{i=n} w_i * x_i + b\right) = \sum_{i=0}^{i=n} w_i * x_i + b$. $w_i$, $x_i$, and b may be various possible values such as decimals, integers (including 0, positive integers, negative integers, or the like), or complex numbers. Activation functions of different neurons in the neural network may be the same or different.

The neural network generally includes a multi-layer structure, and each layer may include one or more neurons. Increasing a depth and/or a width of the neural network can improve an expression capability of the neural network, and provide more powerful information extraction and abstract modeling capabilities for complex systems. The depth of the neural network may refer to a quantity of layers included in the neural network, and a quantity of neurons included in each layer may be referred to as a width of the layer. FIG. 3 is a schematic diagram of a relationship between layers of a neural network. In an implementation, the neural network includes an input layer and an output layer. After performing neuron processing on a received input, the input layer of the neural network transfers a result to the output layer. The output layer obtains an output result of the neural network. In another implementation, the neural network includes an input layer, a hidden layer, and an output layer. After performing neuron processing on a received input, the input layer of the neural network transfers a result to an intermediate hidden layer. The hidden layer then transfers a calculation result to the output layer or an adjacent hidden layer. Finally, the output layer obtains an output result of the neural network. One neural network may include one hidden layer or a plurality of hidden layers that are sequentially connected. This is not limited. In a neural network training process, a loss function may be defined. The loss function describes a gap or difference between an output value of the neural network and an ideal target value. A specific form of the loss function is not limited in the present disclosure. The neural network training process is a process of adjusting a neural network parameter, for example, a quantity of layers and a width that are of the neural network, a weight of a neuron, and/or a parameter in an activation function of the neuron, so that a value of the loss function is less than a threshold or a target requirement is met. That is, the difference between an output of the neural network and the ideal target value is the smallest.

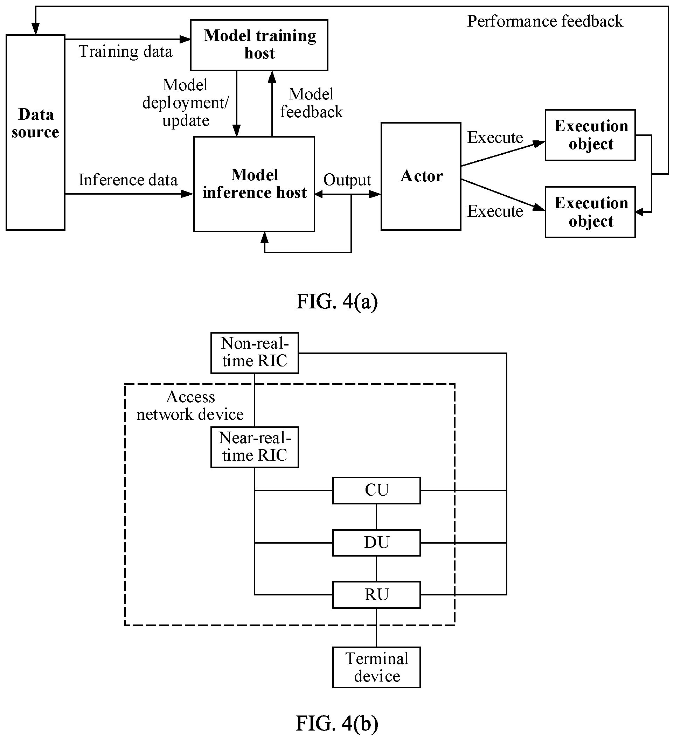

FIG. 4(a) is an example diagram of a first application framework of AI in a communication system. In FIG. 4(a), a data source (data source) is used for storing training data and inference data. A model training node (model training host) analyzes or trains the training data (training data) provided by the data source, to obtain an AI model, and the AI model is deployed in a model inference host (model inference host). The AI model represents a mapping relationship between an input and an output that are of a model. Obtaining the AI model through learning by the model training host is equivalent to obtaining the mapping relationship between the input and output that are of the model through learning by the model training host by using the training data. The model inference host uses the AI model to perform inference based on the inference data provided by the data source, to obtain an inference result. The method may also be described as follows. The model inference host inputs the inference data to the AI model, and obtains an output through the AI model. The output is the inference result. The inference result may indicate: a configuration parameter used (executed) by an execution object, and/or an operation executed by the execution object. The inference result may be planned by an actor (actor) entity in a unified manner, and sent to one or more execution objects (for example, network elements) for execution. The inference data is data used by the AI model for inference, and is equivalent to input data used by the AI model for prediction.

In the present disclosure, the application framework shown in FIG. 4(a) may be deployed in the network element shown in FIG. 1 or FIG. 2. For example, the application framework in FIG. 4(a) may be deployed in the access network device in FIG. 1 or the AI entity in FIG. 2. For example, in the access network device, the model training host may analyze or train the training data (training data) provided by the data source, to obtain a model. The model inference host may use the model and the inference data provided by the data source for inference, to obtain an output of the model. In other words, an input of the model includes the inference data, and the output of the model is an inference result corresponding to the model. A terminal device is considered as the execution object in FIG. 4(a). The access network device may send the inference data and/or the inference result corresponding to the model to the terminal device, and the terminal device may perform a corresponding operation based on the inference data and/or the inference result.

The following describes, with reference to FIG. 4(b) to FIG. 4(e), a network architecture to which communication solutions provided in the present disclosure may be applied.

As shown in FIG. 4(b), in a first possible implementation, an access network device includes a near-real-time RAN intelligent controller (RAN intelligent controller, RIC), configured to perform model learning and/or inference. For example, a near-real-time RIC may obtain, from at least one of a CU, a DU, and an RU, information on a network side and/or a terminal side, and the information may be used as the training data or the inference data. Optionally, the near-real-time RIC may submit the inference result to the at least one of the CU, the DU, and the RU. Optionally, the CU and the DU may exchange the inference result. Optionally, the DU and the RU may exchange the inference result. For example, the near-real-time RIC submits the inference result to the DU, and the DU submits the inference result to the RU. For example, the near-real-time RIC may be used for training the AI model, and use the AI model for inference.

As shown in FIG. 4(b), in a second possible implementation, a non-real-time RIC (optionally, the non-real-time RIC may be located in OAM or a core network device) is included outside the access network device, and is used for model learning and inference. For example, the non-real-time RIC may obtain, from at least one of a CU, a DU, and an RU, information on a network side and/or a terminal side, and the information may be used as the training data or the inference data. The inference result may be submitted to the at least one of the CU, the DU, and the RU. Optionally, the CU and the DU may exchange the inference result. Optionally, the DU and the RU may exchange the inference result. For example, the non-real-time RIC submits the inference result to the DU, and the DU submits the inference result to the RU. For example, the non-real-time RIC is used for training the AI model, and uses the model for inference.

As shown in FIG. 4(b), in a third possible implementation, the access network device includes a near-real-time RIC, and a non-real-time RIC (optionally, the non-real-time RIC may be located in OAM or a core network device) is included outside the access network device. Same as the second possible implementation described above, the non-real-time RIC may be used for model learning and/or inference; and/or same as the first possible implementation described above, the near-real-time RIC may be used for model learning and/or inference; and/or the near-real-time RIC may obtain, from the non-real-time RIC, information about the AI model, obtain, from at least one of a CU, a DU, and an RU, information on a network side and/or a terminal side, and obtain the inference result based on the information and the information about the AI model. Optionally, the near-real-time RIC may submit the inference result to the at least one of the CU, the DU, and the RU. Optionally, the CU and the DU may exchange the inference result. Optionally, the DU and the RU may exchange the inference result. For example, the near-real-time RIC submits the inference result to the DU, and the DU submits the inference result to the RU. For example, the near-real-time RIC is used for training a model A, and uses the model A for inference. For example, the non-real-time RIC is used for training a model B, and uses the model B for inference. For example, the non-real-time RIC is used for training a model C, and submits the model C to the near-real-time RIC, and the near-real-time RIC uses the model C for inference.

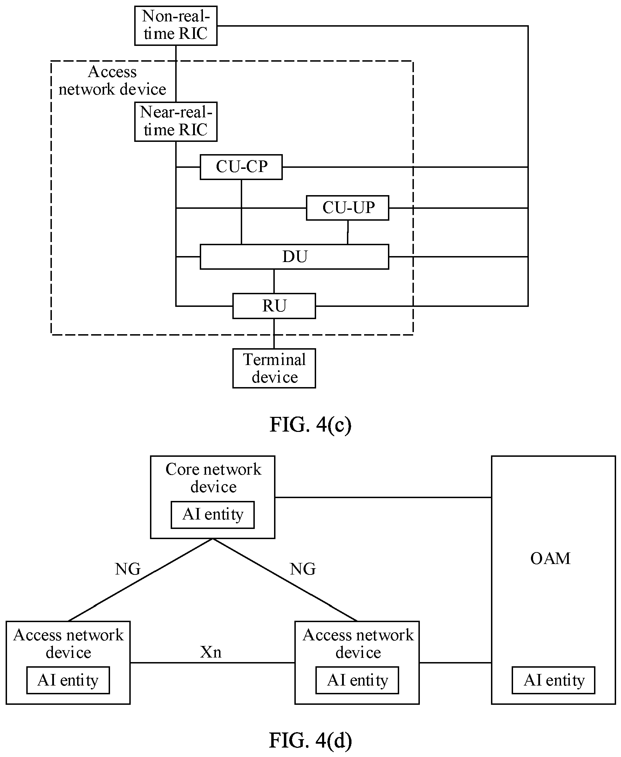

FIG. 4(c) is an example diagram of a network architecture to which a method according to the present disclosure may be applied. In comparison with FIG. 4(b), in FIG. 4(c), the CU is separated into a CU-CP and a CU-UP.

FIG. 4(d) is an example diagram of a network architecture to which a method according to the present disclosure may be applied. As shown in FIG. 4(d), optionally, an access network device includes one or more AI entities, and a function of the AI entity is similar to that of the foregoing near-real-time RIC. Optionally, OAM includes one or more AI entities, and a function of the AI entity is similar to that of the foregoing non-real-time RIC. Optionally, a core network device includes one or more AI entities, and a function of the AI entity is similar to that of the foregoing non-real-time RIC. When the OAM and the core network device each includes an AI entity, models obtained by training AI entities of the OAM and the core network device are different, and/or models used for inference are different.

In the present disclosure, the models are different, and at least one of the following differences is included: structure parameters (for example, a quantity of layers and/or weights of the models) of the models, input parameters of the models, or output parameters of the models.

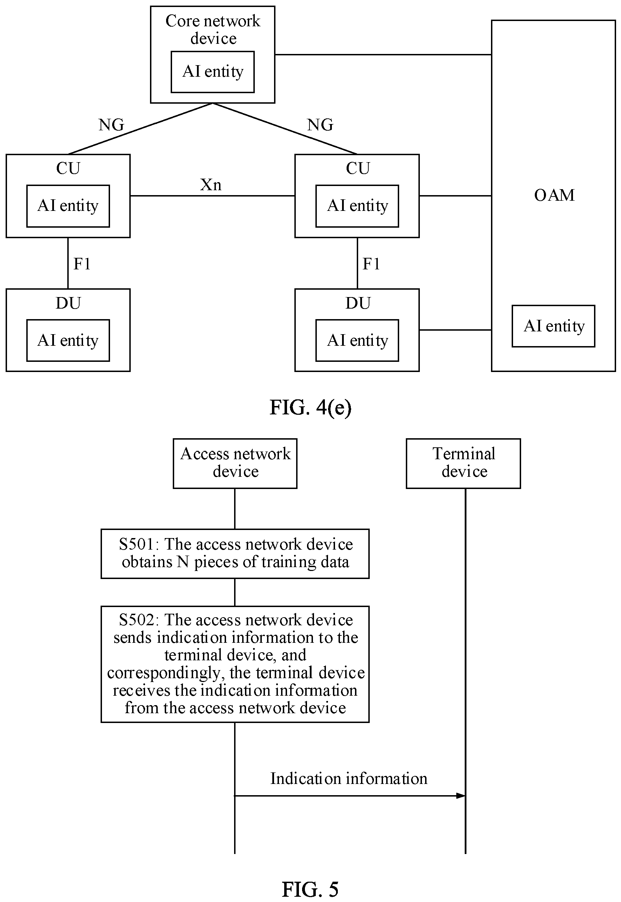

FIG. 4(e) is an example diagram of a network architecture to which a method according to the present disclosure may be applied. In comparison with FIG. 4(d), an access network device in FIG. 4(e) is separated into a CU and a DU. Optionally, the CU may include an AI entity, and a function of the AI entity is similar to that of the foregoing near-real-time RIC. Optionally, the DU may include an AI entity, and a function of the AI entity is similar to that of the foregoing near-real-time RIC. When the CU and the DU each includes an AI entity, models obtained by training AI entities of the CU and the DU are different, and/or models used for inference are different. Optionally, the CU may be further split into a CU-CP and a CU-UP. Optionally, one or more AI models may be deployed in the CU-CP. Optionally, one or more AI models may be deployed in the CU-UP. Optionally, in FIG. 4(d) or FIG. 4(e), OAM of the access network device and OAM of the core network device may be separately deployed.

In the present disclosure, one model may obtain one parameter through inference, or obtain a plurality of parameters through inference. Learning processes of different models may be deployed on different devices or nodes, or may be deployed on a same device or node. Inference processes of different models may be deployed on different devices or nodes, or may be deployed on a same device or node.

It may be understood that, in the present disclosure, the AI entity, the access network device, or the like may perform some or all of the steps in the present disclosure. The steps or operations are merely examples, and the present disclosure may further perform other operations or variations of various operations. In addition, the steps may be performed in different sequences presented in the present disclosure, and not all operations in the present disclosure may need to be performed.

In various embodiments of the present disclosure, unless otherwise stated or there is a logic conflict, terms and/or descriptions in different examples are consistent and may be mutually referenced, and technical features in the different examples may be combined based on an internal logical relationship thereof, to form a new example.

It may be understood that various numbers in the examples of the present disclosure are merely used for differentiation for ease of description, and are not intended to limit the scope of the examples of the present disclosure. Sequence numbers of the foregoing processes do not mean execution sequences, and the execution sequences of the processes should be determined based on functions and internal logic that are of the processes.

The network architecture and the service scenario that are described in the present disclosure are intended to describe the technical solutions in the present disclosure more clearly, but do not constitute a limitation on the technical solutions provided in the present disclosure. A person of ordinary skill in the art may know that with evolution of the network architecture and emergence of a new service scenario, the technical solutions provided in the present disclosure are also applicable to similar technical problems.

FIG. 5 is a schematic flowchart of a communication method according to the present disclosure. Interaction between a terminal device and an access network device is used as an example in the procedure. The method includes the following steps.

S501: The access network device obtains N pieces of training data, where N is an integer greater than 0.

In the present disclosure, training data may include but is not limited to data such as compressed downlink CSI, uncompressed CSI, and reference signal received power (reference signal received power, RSRP). The training data may be any type of data that is related to wireless communication and that can be obtained by the access network device or the terminal device. In an implementation, a specific type of the training data may be related to a function that needs to be implemented by an artificial intelligence model. For example, if an artificial intelligence model that needs to be trained is used for predicting CSI, the training data may be the CSI. If the artificial intelligence model that needs to be trained is used for predicting a data transmission direction (that is, a beam), the training data may be the RSRP. The specific type of the training data is not limited in the present disclosure.

In the present disclosure, the training data may be reported by the terminal device to the access network device, or may be obtained by the access network device through measurement. The following separately provides descriptions.

In a first possible implementation, the training data is reported by the terminal device to the access network device.

In this implementation, the terminal device may send the training data to the access network device, and a specific quantity of pieces of training data sent by the terminal device is not limited. Correspondingly, the access network device may obtain the N pieces of training data via one or more terminal devices. The training data may be wireless channel data. For example, the training data may be compressed CSI. This is not limited. The terminal device may measure a reference signal from the access network device, to obtain the training data. The terminal device may alternatively obtain the training data in another manner. This is not limited in the present disclosure.

In this implementation, the terminal device may further send, to the access network device, mark information corresponding to the training data. Correspondingly, the access network device may further obtain N pieces of mark information corresponding to the N pieces of training data. Optionally, if there are one or more groups of training data in the N pieces of training data, and each group of training data corresponds to same mark information, the method may be further described as: The access network device may obtain the N pieces of training data via the one or more terminal devices, and the access network device may further obtain L pieces of mark information corresponding to the N pieces of training data at the same time, where L is less than N.

In the present disclosure, when obtaining the training data, the terminal device may record an attribute corresponding to the training data or a value of the attribute. For ease of description, the attribute corresponding to the training data or the value of the attribute may be collectively referred to as the mark information corresponding to the training data. In other words, the mark information may indicate the attribute of the training data corresponding to the mark information. The terminal device may send, to the access network device, the mark information corresponding to the training data. Optionally, mark information of different training data may be the same or different. This is not limited. When mark information of a plurality of pieces of training data is the same, one piece of mark information may be recorded and/or reported for the plurality of pieces of training data.

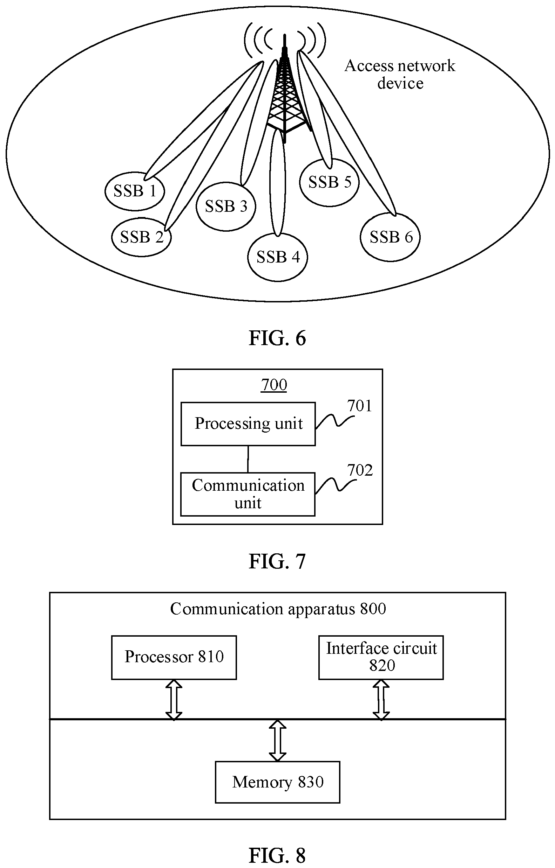

For example, as shown in FIG. 6, a cell of the access network device includes six synchronization signal/physical broadcast channel blocks (synchronizing signal/physical broadcast channel blocks, SSBs), and indexes are respectively an SSB 1 to an SSB 6. Coverage of transmit beams corresponding to the SSBs is different. For details, refer to FIG. 6. When obtaining the training data (for example, measuring downlink CSI through channel estimation), the terminal device may obtain reference signal received power (reference signal received power, RSRP) of each of a plurality of SSBs. The terminal device may use a plurality of SSBs corresponding to a plurality of pieces of measured RSRP with large measurement values as SSBs associated with the training data. For example, an SSB corresponding to RSRP with a largest value may be used as an SSB associated with the training data, an SSB corresponding to RSRP with a second largest value may be used as the SSB associated with the training data, or the like.

With reference to the foregoing description, in a possible implementation, for one piece of training data or a group of pluralities of pieces of training data that have same mark information, the mark information may indicate at least one of the following attributes.

- Index of the SSB associated with the training data: The training data may be associated with one or more SSBs. For example, the SSB associated with the training data may include the SSB corresponding to measured RSRP with the largest value, the SSB corresponding to measured RSRP with the second largest value, and/or the like. The SSBs associated with the training data may be the plurality of SSBs corresponding to the plurality of pieces of measured RSRP with large measurement values when the terminal device obtains the training data. The terminal device may establish an association relationship between the training data and the plurality of SSBs.
- RSRP of the SSB associated with the training data: The training data may be associated with one or more RSRP, and the RSRP may be the RSRP of the SSB associated with the training data. If the training data is associated with a plurality of SSBs, the RSRP is RSRP respectively corresponding to the plurality of SSBs.
- Type of a wireless channel associated with the training data: In an implementation, the type includes line of sight (line of sight, LOS) and non-line of sight (non-line of sight, NLOS), indicating that the wireless channel is a LOS channel or an NLOS channel. The LOS and the NLOS may be determined in a conventional non-AI manner, or may be determined by using a trained AI model. In another implementation, the type may alternatively include uplink, downlink, and sidelink (sidelink), indicating that CSI obtained from the wireless channel is uplink CSI, downlink CSI, and sidelink CSI respectively.
- Timing advance (timing advance, TA) associated with the training data: The terminal device may obtain the TA based on a random access procedure, or determine the TA based on TA information sent by the access network device. After the terminal device obtains the TA, the TA is valid within a preset TA validity time period or before a TA is obtained next time. In other words, the TA associated with the training data is a TA that is valid when the training data is obtained. A specific process is not described.
- Cell identifier of a cell associated with the training data: In other words, the cell identifier indicates a cell in which the training data is obtained.
- Dimension information of the training data: For example, one or more of a time domain dimension, a frequency domain dimension, and an antenna domain (space domain) dimension are included. Optionally, the dimension information may further include a granularity of each dimension. For example, a granularity of the time domain dimension includes an orthogonal frequency division multiplexing (orthogonal frequency division multiplexing, OFDM) symbol or a slot, and a granularity of the frequency domain dimension includes a subcarrier or a resource block (resource block, RB).

The foregoing is merely an example. The mark information may further include other attributes, and examples are not described herein one by one.

In a second possible implementation, the training data is obtained by the access network device through measurement.

In this implementation, the access network device may indicate, to the terminal device, a time unit (for example, a radio frame, a subframe, a slot, or a symbol) in which the access network device obtains the training data. Alternatively, the time unit in which the training data is obtained is agreed on in a protocol. This is not limited. If the access network device periodically obtains the training data, the access network device may further indicate a periodicity in which the access network device obtains the training data and/or an offset (offset) of the time unit in which the access network device obtains the training data in the periodicity. Alternatively, at least one of the periodicity or the offset may be agreed on in a protocol. For example, the periodicity is indicated by the access network device, and the offset is agreed on in the protocol. For another example, both the periodicity and the offset are indicated by the access network device.

After receiving the time unit indicated by the access network device, the terminal device may send, to the access network device, an attribute or a value of the attribute that is obtained in the time unit or near the time unit. The access network device may use the attribute or the value of the attribute as the mark information corresponding to the training data.

For example, the time unit indicated by the access network device to the terminal device is a time unit T, and the terminal device may send, to the access network device, at least one of the following information obtained in the time unit T: one or more measured RSRP; one or more SSBs corresponding to the one or more measured RSRP; a cell identifier of a cell to which the measured RSRP belongs; and a type of a wireless channel corresponding to the measured RSRP. The access network device uses at least one of the foregoing information from the terminal device as the mark information of the training data obtained in the time unit T. For more detailed descriptions of the mark information, refer to the foregoing descriptions. Details are not described herein again. For example, an SSB reported by the terminal device may include an SSB corresponding to measured RSRP with a largest value, an SSB corresponding to measured RSRP with a second largest value, and/or the like.

In the present disclosure, the training data obtained by the access network device may be used for training the artificial intelligence model. Specifically, the access network device may train one or more artificial intelligence models based on the N pieces of training data. A function of the artificial intelligence model is not limited. For example, the artificial intelligence model may include but is not limited to an artificial intelligence model used for CSI compression feedback, an artificial intelligence model used for constellation modulation and demodulation, an artificial intelligence model used for channel coding and decoding, or an artificial intelligence model used for uplink precoding. In the present disclosure, the N pieces of training data may be divided to construct a scenario-based training dataset, and training data in each training dataset includes a same feature. The same feature means that the foregoing attributes associated with the training data are the same, or values of the attributes are within a same range. Each training dataset may be used for training one artificial intelligence model, to implement scenario-based artificial intelligence model training. In the present disclosure, the scenario-based artificial intelligence model training is emphasized, to be specific, artificial intelligence models are separately trained for different training datasets, instead of emphasizing that one training dataset is used for training a fixed artificial intelligence model. For example, a plurality of different artificial intelligence models may be obtained through learning by using one training dataset and using different machine learning algorithms or different model parameters (for example, a quantity of layers of a neural network). Optionally, there may be a performance difference between the plurality of different artificial intelligence models. For the different training datasets, a same machine learning algorithm may be used for model learning, or different algorithms may be used for model learning. This is not limited.

For example, in a possible implementation, one artificial intelligence model may correspond to one training condition, and the training condition may be preset or agreed on in a protocol, or may be determined by the access network device. The training condition may be used for filtering out training data for training the artificial intelligence model. In this implementation, the training data used for training the artificial intelligence model is determined based on the mark information. Specifically, one or more pieces of training data used for training the artificial intelligence model (where in the present disclosure, the one or more pieces of training data used for training the artificial intelligence model may also be denoted as X pieces of training data, and X is a positive integer, or is described as an integer greater than 0) are training data that is in the N pieces of training data and whose corresponding mark information (or attributes) meets (meet) the training condition corresponding to the artificial intelligence model. Optionally, the training condition may alternatively be described as a condition. For example, for the access network device or another network element that performs model training, the condition may be considered as a training condition, and for the terminal device or another network element that performs inference by using the model, the condition may be considered as an application condition.

For example, the mark information includes an index of the SSB, and a training condition corresponding to an artificial intelligence model 1 includes an index of at least one SSB. For example, included indexes are an SSB 1 and an SSB 2. In this case, training data that is in the N pieces of training data and whose mark information includes the SSB 1 and/or the SSB 2 as the index of the SSB may be classified as one training dataset, and the artificial intelligence model 1 may be trained by using the foregoing training dataset.

It can be learned from the foregoing descriptions that in this implementation, the training condition is first determined, then the one or more pieces of training data that meet the training condition are determined, and the one or more pieces of training data are used for training the model.

In another possible implementation, the N pieces of training data may be clustered, and training data whose clustering features are the same or whose clustering features are within a same range is classified as one training dataset. The clustering feature may be a feature such as a variance, a covariance matrix, or a multipath latency distribution. For example, training data whose variances are within a same range is classified as one training dataset. For another example, training data whose covariance matrices are within a same range is classified as one training dataset.

Because the training data is associated with first mark information, an attribute commonly corresponding to the training data whose clustering features are the same or within a same range may be determined, and the attribute commonly corresponding to the training data is used as a training condition. The training condition corresponds to an artificial intelligence model obtained through training by using the training data with the clustering features. For example, the training data whose variances are within a same range is classified as one training dataset, and it is determined that indexes of SSBs associated with the training data included in the training dataset are all the SSB 1. In this case, the SSB 1 may be used as an attribute included in the training condition.

It can be learned from the foregoing descriptions that in this implementation, one or more pieces of training data for training the artificial intelligence model are first determined, and then the training condition of the artificial intelligence model is determined based on the one or more pieces of training data.

In the present disclosure, specific content of the training condition is not limited. For example, the training condition may include at least one of the following:

an index of a synchronization signal block, where the index is one or more; a value range of the reference signal received power; the type of the wireless channel; a value range of the timing advance; and the cell identifier, where the identifier may be an identifier of one cell or identifiers of a plurality of cells.

The foregoing is merely an example. The training condition may further include other content, and examples are not described herein one by one.

In the present disclosure, the access network device may further send, to the terminal device, the training condition corresponding to the artificial intelligence model. A specific process is not described again.

S502: The access network device sends indication information to the terminal device. Correspondingly, the terminal device receives the indication information from the access network device.

The indication information indicates information about M artificial intelligence models, where M is an integer greater than 0. The M artificial intelligence models may be all artificial intelligence models trained based on the N pieces of training data, or may be some of the artificial intelligence models. This is specifically determined based on an actual situation.

In the present disclosure, in an implementation, after the access network device completes training of the artificial intelligence model, the access network device may actively send the indication information to the terminal device. The access network device may further send, to the terminal device, M training conditions corresponding to the M artificial intelligence models. The M artificial intelligence models are in one-to-one correspondence with the M training conditions, in other words, each artificial intelligence model corresponds to one training condition.

In this manner, after obtaining the information about the M artificial intelligence models, the terminal device may determine a used artificial intelligence model based on an actual situation. For example, when using the artificial intelligence model or before using the artificial intelligence model, the terminal device may obtain an attribute of current wireless channel data and a training condition that the attribute meets, and use an artificial intelligence model corresponding to the training condition as a to-be-used artificial intelligence model. For example, the attribute of the current wireless channel data obtained by the terminal device includes the following: An associated SSB is the SSB 1. If a training condition of one of the M artificial intelligence models is that training data associated with the SSB 1 is used for training, the terminal device may use the artificial intelligence model. The training condition may be considered as an application condition on a terminal device side.

In another implementation, after completing training of the artificial intelligence model, the access network device sends, after receiving a request message from the terminal device, the indication information to the terminal device. In this implementation, a quantity of artificial intelligence models indicated by the access network device to the terminal device may be less than or equal to a quantity of actually trained artificial intelligence models. For example, the access network device indicates information about one artificial intelligence model based on the indication information, that is, M=1. A specific value of M may be determined based on a quantity of artificial intelligence models that are actually requested by the terminal device.

In this manner, the terminal device may request, based on an actually required artificial intelligence model, a corresponding artificial intelligence model from the access network device. For example, the terminal device may send model indication information to the access network device, and the model indication information may indicate an artificial intelligence model requested by the terminal device. The access network device may determine, based on the model indication information, the artificial intelligence model requested by the terminal device, and indicate, based on the indication information, information about the artificial intelligence model requested by the terminal device.

For example, the model indication information may be an index of the artificial intelligence model. When training the artificial intelligence model, the access network device may configure different indexes for artificial intelligence models in different scenarios, or indexes of the artificial intelligence models in the different scenarios are preset. The access network device may indicate an index of an artificial intelligence model in each scenario to the terminal device. When the terminal device needs to use the artificial intelligence model, the terminal device may send, to the access network device, an index corresponding to the artificial intelligence model, to obtain information about the artificial intelligence model from the access network device.

For example, the model indication information may be the training condition corresponding to the artificial intelligence model. The access network device may send, to the terminal device in advance, the training condition corresponding to the artificial intelligence model. If the training condition is preset, the access network device may not send the training condition. When the terminal device needs to use the artificial intelligence model, the terminal device may send, to the access network device, the training condition corresponding to the artificial intelligence model, to obtain the information about the artificial intelligence model from the access network device.

For example, the model indication information may be mark information corresponding to training data for training the artificial intelligence model. When the terminal device needs to use the artificial intelligence model, the terminal device may not know which artificial intelligence model is specifically required. In this case, the terminal device may obtain a related attribute of a current wireless channel through measurement, for example, obtain one or more of a plurality of pieces of RSRP, a plurality of SSBs corresponding to the plurality of pieces of RSRP, cell identifiers of cells to which the plurality of pieces of RSRP belong, and a type of a wireless channel corresponding to the RSRP. As described above, the information may be collectively referred to as the mark information. The terminal device may send, to the access network device, the mark information including at least one of the foregoing, and the access network device may indicate, to the terminal device, an artificial intelligence model corresponding to a training condition that the mark information meets.

The foregoing is merely an example. The model indication information may further be in another implementation form. This is not limited in the present disclosure.

After obtaining the artificial intelligence model trained by the access network device, the terminal device may use a corresponding artificial intelligence model based on an actual requirement.

Based on the foregoing process, when obtaining the N pieces of training data, the access network device may divide the N pieces of training data based on different training conditions, to construct training datasets corresponding to the different training conditions. Attributes included in the training conditions may represent scenarios corresponding to the training data, in other words, it is equivalent to dividing the N pieces of training data into training datasets of a plurality of scenarios. When the artificial intelligence model is trained, training data for training one artificial intelligence model meets a training condition corresponding to the artificial intelligence model, so that the scenario-based artificial intelligence model training can be implemented. In this way, an obtained model is more compliant to a channel condition, correctness of a model is higher, and communication efficiency is higher. In addition, the method can further maintain low signaling overheads when a scenario-based artificial intelligence model is obtained. For example, in a possible implementation, the access network device constructs a terminal device-specific (specific) dataset by using all training data of each terminal device, trains a terminal device-specific model by using the terminal device-specific dataset, and then configures a model corresponding to the terminal device for each terminal device. Each terminal device uses the terminal device-specific model. In this manner, training a specific model for each terminal device causes high network signaling overheads. In addition, even for a same terminal device, when the terminal device moves, a position and an environment in which the terminal device is located change. Consequently, distributions of wireless channel samples collected by the same terminal device at different moments may also be greatly different. In this implementation, although the terminal device-specific model can be obtained, data correlation cannot be used, and signaling overheads are high.

In the foregoing process, interaction between the access network device and the terminal device is used as an example. When an AI entity is located outside the access network device and is an independent module or network element, the access network device may forward the N pieces of training data to the AI entity, and the AI entity performs artificial intelligence model training. The AI entity may indicate information about a trained artificial intelligence model to the access network device, and then the access network device indicates the information about the trained artificial intelligence model to the terminal device. Other processes are similar to the procedure in FIG. 5. Details are not described herein again.

In the foregoing process, the access network device is used as an example for description. For one model, model training may be actually performed by a module (or a unit, a network element, or the like) in the access network device, for example, a near-real-time RIC, an AI entity in the access network device, an AI entity in a CU, or an AI entity in a DU. This is not limited. Modules configured to train different models may be the same or may be different. This is not limited. Information about the model may be sent to the terminal device after being submitted, to another module in the access network, by the module that trains the model. For example, after the AI entity in the CU obtains a model through training, information about the model is sent to the terminal device through an air interface after sequentially passing through the DU and the RU. Examples are not provided one by one.

With reference to the foregoing descriptions, the following describes how the access network device constructs, when the mark information includes different attributes and in the different training conditions, the training datasets corresponding to the different training conditions.

Implementation 1: It is assumed that the mark information corresponding to the training data includes an index of an SSB associated with the training data.

One SSB is associated with one transmit beam of the access network device. Coverage of each transmit beam is usually centralized, and does not change significantly in a long time period. In other words, environments and distributions that are of wireless channels in the coverage of each transmit beam are similar. Therefore, training data associated with one SSB may be used as a training dataset.

In this implementation, when obtaining the training data through measurement, the terminal device may obtain RSRP of at least one SSB through measurement. The terminal device may consider that the terminal device is in coverage of an SSB associated with largest RSRP. Therefore, the training data may be marked by using an index of the SSB associated with the largest RSRP. In other words, mark information of the training data may include the index of the SSB with the largest RSRP in the at least one SSB.

For example, as shown in FIG. 6, a cell of the access network device includes six SSBs, and indexes are respectively an SSB 1 to an SSB 6. Coverage of transmit beams corresponding to the SSBs is different. For details, refer to FIG. 6. When the terminal device measures the training data, if an index of an SSB associated with measured largest RSRP is the SSB 1, the mark information corresponding to the training data may include the SSB 1.

In this implementation, when training the artificial intelligence model, the access network device or the AI entity may determine, based on the index of the SSB, one or more pieces of training data for training the artificial intelligence model, in other words, construct a training dataset for training the artificial intelligence model. Specifically, when constructing the training dataset, the access network device or the AI entity may classify training data corresponding to a same index of SSBs as one training dataset. In this case, the training condition of the artificial intelligence model may include the index of the SSB. For example, for one artificial intelligence model, a training condition corresponding to the artificial intelligence model includes a first index of a first SSB. Correspondingly, one or more pieces of training data that are in the N pieces of training data and whose corresponding mark information includes the first index of the first SSB may be used for training the artificial intelligence model.

For example, with reference to FIG. 6, the cell includes a terminal device 1 and a terminal device 2. Training data reported by the terminal device 1 is training data 1 to training data 6, and training data reported by the terminal device 2 is training data 7 to training data 12. For SSBs respectively associated with the training data 1 to the training data 12, refer to Table 1.

**Table 1**

| Training data | Index of an SSB |
|---|---|
| Training data 1 | SSB 1 |
| Training data 2 | SSB 2 |
| Training data 3 | SSB 3 |
| Training data 4 | SSB 1 |
| Training data 5 | SSB 2 |
| Training data 6 | SSB 3 |
| Training data 7 | SSB 1 |
| Training data 8 | SSB 2 |
| Training data 9 | SSB 3 |
| Training data 10 | SSB 1 |

(continued)

| Training data | Index of an SSB |
|---|---|
| Training data 11 | SSB 2 |
| Training data 12 | SSB 3 |

It is assumed that the access network device or the AI entity trains three artificial intelligence models by using the foregoing training data. An index included in a training condition corresponding to an artificial intelligence model 1 is the SSB 1, an index included in a training condition corresponding to an artificial intelligence model 2 is the SSB 2, and an index included in a training condition corresponding to an artificial intelligence model 3 is the SSB 3. In this case, one or more pieces of training data used for training each artificial intelligence model may be shown in Table 2.

**Table 2**

| Training condition | Training data | Artificial intelligence model |
|---|---|---|
| SSB 1 | Training dataset 1, including:<br>training data 1;<br>training data 4;<br>training data 7; and<br>training data 10. | Artificial intelligence model 1 |
| SSB 2 | Training dataset 2, including:<br>training data 2;<br>training data 5;<br>training data 8; and<br>training data 11. | Artificial intelligence model 2 |
| SSB 3 | Training dataset 3, including:<br>training data 3;<br>training data 6;<br>training data 9; and<br>training data 12. | Artificial intelligence model 3 |

With reference to Table 2, the access network device or the AI entity may train the artificial intelligence model 1 by using training data in the training dataset 1, train the artificial intelligence model 2 by using training data in the training dataset 2, and train the artificial intelligence model 3 by using training data in the training dataset 3.

In an implementation, the access network device may indicate, to the terminal device, each artificial intelligence model obtained through training and a training condition associated with each artificial intelligence model. When using the artificial intelligence model, the terminal device determines, based on a training condition corresponding to a current environment, which artificial intelligence model needs to be used. For example, the access network device indicates, to the terminal device, information about the artificial intelligence model 1, information about the artificial intelligence model 2, and information about the artificial intelligence model 3, and indicates the training condition corresponding to each artificial intelligence model. The terminal device may perform inference by using the artificial intelligence model and inference data. If the terminal device measures each SSB when measuring the inference data, and measured RSRP of the SSB 2 is the largest, the terminal device may use the artificial intelligence model 2.

In another implementation, when the terminal device needs to use the artificial intelligence model, the terminal device requests a corresponding artificial intelligence model from the access network device. The terminal device may request, by sending an index of the artificial intelligence model, an artificial intelligence model to be used. Alternatively, the terminal device may send, to the access network device, mark information corresponding to the current wireless channel data, and the access network device may indicate, to the terminal device, an artificial intelligence model corresponding to a training condition that the mark information meets. For example, the mark information sent by the terminal device includes an index of the SSB 3, and the access network device determines that the training condition corresponding to the artificial intelligence model 3 includes the SSB 3, and indicates the information about the artificial intelligence model 3 to the terminal device.

In the foregoing example, the training condition includes an index of one SSB. In actual application, the training condition may include indexes of a plurality of SSBs. For example, the access network device may group SSBs, group one or more SSBs whose beam directions are adjacent or whose channel environments in the beam directions are similar into one group, and classify training data associated with a same group of SSBs as one training dataset. As shown in FIG. 6, if coverage of beam directions corresponding to SSBs whose indexes are the SSB 1, the SSB 2, and the SSB 3 are close, the SSBs whose indexes are the SSB 1, the SSB 2, and the SSB 3 are grouped into one group. Similarly, SSBs whose indexes are the SSB 4, the SSB 5, and the SSB 6 may also be grouped into one group. In this case, training data associated with the SSB 1, the SSB 2, and the SSB 3 may be classified as one training dataset, and training data associated with the SSB 4, the SSB 5, and the SSB 6 may be classified as another training dataset.

For example, the N pieces of training data obtained by the access network device are shown in Table 3.

**Table 3**

| Training data | Index of an SSB |
|---|---|
| Training data 1 | SSB 1 |
| Training data 2 | SSB 2 |
| Training data 3 | SSB 3 |
| Training data 4 | SSB 4 |
| Training data 5 | SSB 5 |
| Training data 6 | SSB 6 |
| Training data 7 | SSB 1 |
| Training data 8 | SSB 2 |
| Training data 9 | SSB 3 |
| Training data 10 | SSB 4 |
| Training data 11 | SSB 5 |
| Training data 12 | SSB 6 |

With reference to the foregoing example, according to Table 3, an association relationship that is between the training datasets, the artificial intelligence models, and the SSBs and that is determined by the access network device may be shown in Table 4.

**Table 4**

| Training condition | Training data | Artificial intelligence model |
|---|---|---|
| SSB 1, SSB 2, and SSB 3 | Training dataset 1, including: training data 1; training data 2; training data 3; training data 7; training data 8; and training data 9. | Artificial intelligence model 1 |
| SSB 4, SSB 5, and SSB 6 | Training dataset 2, including: training data 4; training data 5; training data 6; training data 10; training data 11; and training data 12. | Artificial intelligence model 2 |

With reference to table 4, when the artificial intelligence model 1 is trained, training data associated with at least one of the SSB 1, the SSB 2, or the SSB 3 is used for training. When the artificial intelligence model 2 is trained, training data associated with at least one of the SSB 4, the SSB 5, or the SSB 6 is used for training.

If the terminal device learns, through measurement, that RSRP of the SSB 1, the SSB 2, or the SSB 3 is the largest, it is determined that the current wireless channel data is associated with the SSB 1, the SSB 2, or the SSB 3, so that an artificial intelligence model trained by using training data associated with the SSB 1, the SSB 2, or the SSB 3 may be used as a to-be-used artificial intelligence model. The artificial intelligence model 1 is to be used herein. If measured RSRP of the SSB 4, the SSB 5, or the SSB 6 is the largest, it is determined that the current wireless channel data is associated with the SSB 4, the SSB 5, or the SSB 6, so that an artificial intelligence model trained by using training data associated with the SSB 4, the SSB 5, or the SSB 6 may be used as the to-be-used artificial intelligence model. The artificial intelligence model 2 is to be used herein.

According to the foregoing method, when collecting the plurality of pieces of training data, the access network device or the AI entity may divide the training data by using indexes of SSBs associated with the plurality of pieces of training data, to construct a scenario-based training dataset, so that distributions of wireless channels in each training dataset are centralized or similar and scenario-based model training is implemented.

In the foregoing described implementation, if the plurality of pieces of training data are associated with a same SSB or a same group of SSBs, it may be considered that environments and distributions that are of wireless channels corresponding to the training data are similar. In the present disclosure, the training data may be further divided based on another attribute, so that environments and distributions that are of wireless channels corresponding to divided training data are similar.

Implementation 2: It is assumed that the mark information corresponding to the training data includes at least one of the following attributes:

first RSRP associated with the training data, where the first RSRP is largest RSRP measured when the terminal device obtains the training data;
an index of a first SSB associated with the training data, where the first SSB is an SSB corresponding to the first RSRP;
second RSRP associated with the training data, where the second RSRP is second largest RSRP measured when the terminal device obtains the training data;
an index of a second SSB associated with the training data, where the second SSB is an SSB corresponding to the second RSRP;
a type of a wireless channel associated with the training data, where the type includes line of sight and non-line of sight; and
a timing advance associated with the training data.

It can be learned from the foregoing descriptions that, in comparison with the implementation 1, in the implementation 2, the mark information includes more attributes. For example, because a wireless channel environment of a wireless channel of a line of sight type is different from that of a wireless channel of a non-line of sight type, training data of different types of wireless channels can be prevented, by adding the type of the wireless channel, from being classified as one training dataset.

Similar to the implementation 1, in the implementation 2, when obtaining the training data, the terminal device records the mark information of the training data, and when reporting the training data to the access network device, the terminal device also reports the mark information corresponding to the training data to the access network device.

When training the artificial intelligence model, the access network device or the AI entity may use one or more pieces of training data whose corresponding mark information meets the training condition corresponding to the artificial intelligence model to train the artificial intelligence model, in other words, construct a training dataset for training the artificial intelligence model, and the training dataset includes the one or more pieces of training data. After the training dataset is constructed, the access network device or the AI entity trains the artificial intelligence model based on each constructed training dataset. One training dataset may be for training one artificial intelligence model.

For example, an association relationship between the training dataset, the artificial intelligence model, and the training condition is shown in Table 5.

**Table 5**

| Training condition | Training dataset | Artificial intelligence model |
|---|---|---|
| Index of a first SSB: SSB 1;<br>value range of RSRP: [a1, a2], where a1 is less than a2, and a1 and a2 are greater than 0;<br>line of sight; and<br>value range of a TA: [b1, b2], where b1 is less than b2, and b1 and b2 are greater than 0. | Training dataset 1 | Artificial intelligence model 1 |
| Index of the first SSB: SSB 1;<br>value range of the RSRP: [a3, a4], where a3 is less than a4, and a3 and a4 are greater than 0;<br>non-line of sight; and<br>value range of the TA: [b3, b4], where b3 is less than b4, and b3 and b4 are greater than 0. | Training dataset 2 | Artificial intelligence model 2 |
| Index of the first SSB: SSB 2;<br>value range of the RSRP: [a5, a6], where a5 is less than a6, and a5 and a6 are greater than 0;<br>line of sight; and value range of the TA: [b5, b6], where b5 is less than b6, and b5 and b6 are greater than 0. | Training dataset 3 | Artificial intelligence model 3 |

When indicating the artificial intelligence model to the terminal device, the access network device may further indicate the training condition corresponding to the artificial intelligence model to the terminal device. When using the artificial intelligence model, the terminal device determines, based on the training condition corresponding to the artificial intelligence model, which artificial intelligence model needs to be used. For example, when obtaining the current wireless channel data, the terminal device learns, through measurement, that the attribute of the current wireless channel data is: If the largest RSRP is within [a3, a4], the RSRP corresponds to the SSB 1, it is determined that the type of the wireless channel is the non-line of sight, and it is determined that the TA is within [b3, b4], it is determined that the attribute of the current wireless channel data meets the training condition corresponding to the artificial intelligence model 2, and it may be determined to use the artificial intelligence model 2.

In addition, if the terminal device determines that the current wireless channel data obtained through measurement does not meet a training condition corresponding to any artificial intelligence model, the terminal device does not use any artificial intelligence model, or randomly selects an artificial intelligence model, or selects artificial intelligence models whose training conditions are close, or uses a default artificial intelligence model, where the default artificial intelligence model is predefined or configured by the access network device. This is not limited.

According to the foregoing method, when collecting the plurality of pieces of training data, the access network device or the AI entity may divide the training data by using information such as indexes of SSBs associated with the plurality of pieces of training data, the RSRP, the TA, and the LOS/NLOS, to construct a scenario-based training dataset, so that distributions of wireless channels in each training dataset are centralized or similar and scenario-based artificial intelligence model training is implemented.

In the foregoing two implementations, the artificial intelligence model is mainly trained based on training data collected in a same cell. Alternatively, in this embodiment, training data of different cells may be used for training the artificial intelligence model, in other words, the training data of the different cells may be classified as one training dataset.

Implementation 3: Based on the implementation 2, the mark information of the training data may further include: a cell identifier of a cell associated with the training data.

In the implementation 3, in an implementation, training data of a plurality of cells may be directly divided into a plurality of different training datasets based on the training condition of the artificial intelligence model. Therefore, a training dataset corresponding to each artificial intelligence model includes training data of one or more cells.

In another implementation, training data of each cell may be divided into a plurality of training datasets, and one training dataset includes one or more pieces of training data. When the training dataset is divided, division may be performed based on the mark information. For example, training data that includes indexes of a same SSB in the mark information is classified as one training dataset.

When training datasets have been divided in each cell, data analysis may be performed on each training dataset of each cell, to extract a main feature of each training dataset, or perform statistics on statistical features of each training dataset, such as variances, covariance matrices, and multipath latency distributions. Training datasets with similar

EP 4 407 914 A1

features in the plurality of cells are further merged into one training dataset, so that training datasets of the plurality of cells may be further merged.

For example, there are a cell 1 and a cell 2, training data collected in the cell 1 is divided into a training dataset 1 to a training dataset 3, and an association relationship between a training dataset of each cell and mark information is shown in Table 6.

**Table 6**

| Cell | Mark information | Training dataset |
|---|---|---|
| Cell 1 | Mark information 1 | Training dataset 1 |
| Cell 1 | Mark information 2 | Training dataset 2 |
| Cell 1 | Mark information 3 | Training dataset 3 |
| Cell 2 | Mark information 4 | Training dataset 4 |
| Cell 2 | Mark information 5 | Training dataset 5 |
| Cell 2 | Mark information 6 | Training dataset 6 |

It is assumed that a training condition corresponding to an artificial intelligence model 1 that needs to be trained includes the mark information 1, the mark information 2, and the mark information 4, a training condition corresponding to an artificial intelligence model 2 includes the mark information 3 and the mark information 5, and a training condition corresponding to an artificial intelligence model 3 includes the mark information 6. In this case, an association relationship between a merged training dataset, a training condition, and an artificial intelligence model is shown in Table 7.

**Table 7**

| Training condition | Merged training dataset | Artificial intelligence model |
|---|---|---|
| Identifier of the cell 1, the mark information 1<br>Identifier of the cell 1, the mark information 2<br>Identifier of the cell 2, the mark information 4 | Training dataset 7 | Artificial intelligence model 1 |
| Identifier of the cell 1, the mark information 3<br>Identifier of the cell 2, the mark information 5 | Training dataset 8 | Artificial intelligence model 2 |
| Identifier of the cell 2, the mark information 6 | Training dataset 9 | Artificial intelligence model 3 |

It can be learned from Table 7 that the training dataset 7 used for training the artificial intelligence model 1 is obtained by combining the training dataset 1 in the cell 1, the training dataset 2 in the cell 1, and the training dataset 4 in the cell 2. Other cases are deduced by analogy, and details are not described again.

For one artificial intelligence model, if training data used for training the artificial intelligence model is from a plurality of cells, in one of the plurality of cells, the access network device may send, to a terminal device in the cell, an artificial intelligence model associated with mark information of the cell and one or more pieces of mark information that are of the cell and that are associated with the artificial intelligence model, and the terminal device locally stores an artificial intelligence model that may be used in the cell. For example, with reference to Table 7, for the cell 1, the access network device may indicate the artificial intelligence model 1 and the artificial intelligence model 2 to a terminal device in the cell 1, and does not indicate the artificial intelligence model 3. When the access network device indicates, to the terminal device in the cell 1, the training condition corresponding to the artificial intelligence model 1, only the mark information 1 and the mark information 2 may be indicated, and the mark information 4 is not indicated.

Alternatively, the access network device may send, to each terminal device in the cell, an artificial intelligence model associated with mark information of the cell and another cell and one or more pieces of mark information that are of the cell and the another cell and that are associated with the artificial intelligence model. For example, each artificial intelligence model associated with mark information of the cell and several adjacent cells and one or more pieces of mark information that are of the cell and the several adjacent cells and that are associated with each artificial intelligence model are sent to the terminal device in the cell. For another example, an artificial intelligence model associated with mark information of a RAN-based notification area (RAN-based notification area, RNA) in which the cell is located and one or more pieces of mark information that are of the RNA and that are associated with the artificial intelligence model are sent to the terminal device in the cell. Correspondingly, the terminal device may store an artificial intelligence model that may be used in the cell and the several adjacent cells, so that an applicable artificial intelligence model can be quickly determined after cell handover.

For example, with reference to Table 7, for the cell 1, the access network device may indicate the artificial intelligence model 1, the artificial intelligence model 2, and the artificial intelligence model 3 to the terminal device in the cell 1. When the access network device indicates, to the terminal device in the cell 1, the training condition corresponding to the artificial intelligence model 1, the mark information 1, the mark information 2, and the mark information 4 may be indicated. Similarly, when the access network device indicates, to the terminal device in the cell 1, the training condition corresponding to the artificial intelligence model 3, the mark information 6 may be indicated.

According to the foregoing method, the training data of the plurality of cells is merged, so that the training data of the plurality of cells can jointly construct the training dataset used for training the artificial intelligence model, and the plurality of cells can share a same artificial intelligence model, to improve training efficiency of the artificial intelligence model.

In the implementation 1 to the implementation 3, the training dataset used for training the artificial intelligence model is determined based on the mark information of the training data reported by the terminal device, that is, the training data is divided based on a preset training condition. In the present disclosure, the training data may be further divided first, and then the training condition of the artificial intelligence model is determined based on divided training data. In other words, it is analyzed from the training data that which attributes in the mark information are related to distributions of the training data.

In an implementation 4, the training condition corresponding to the artificial intelligence model is no longer preset or preconfigured, and the training condition corresponding to the artificial intelligence model is determined based on one or more pieces of training data for training the artificial intelligence model.

Specifically, after obtaining the N pieces of training data, the access network device or the AI entity clusters the N pieces of training data, and classifies training data whose clustering features are the same or within a same range as one training dataset. One training dataset includes one or more pieces of training data. A clustering feature may be a feature such as a variance, a covariance matrix, or a multipath latency distribution of the training data. Because each piece of training data is associated with one piece of mark information, an intersection set or a union set of attributes corresponding to training data in each training dataset may be determined based on a divided training dataset, to determine the training condition corresponding to the artificial intelligence model.

For example, it is determined based on the divided training dataset that SSBs associated with training data in the training dataset are centralized, where a part of training data is associated with an SSB 1, and another part of training data is associated with an SSB 2. However, other information such as RSRP, a TA, and LOS/NLOS has no definite regularity. In this case, it may be considered that a distribution of a wireless channel is related to an SSB, and it may be determined that a training condition of an artificial intelligence model trained by using the training data includes an index of the SSB, for example, includes the SSB 1 and the SSB 2.

For another example, types of wireless channels associated with training data in one training dataset each are line of sight, but other information such as the RSRP and the TA has no definite regularity. In this case, it may be considered that the distribution of the wireless channel is associated with the line of sight. In this case, it may be determined that a type of the wireless channel included in the training condition of the artificial intelligence model trained by using the training data is the line of sight.

The access network device or the AI entity performs artificial intelligence model training based on each constructed training dataset. Each training dataset may be trained to obtain one artificial intelligence model, and each artificial intelligence model obtained through training is also associated with one training condition. The access network device sends, to the terminal device, each artificial intelligence model and a training condition associated with the artificial intelligence model. For details, refer to the foregoing descriptions. Details are not described herein again.

In the foregoing method, the training data is clustered to determine which information is related to the distribution of the wireless channel, instead of dividing the training dataset based on the preset training condition, so that accuracy of data division and accuracy of training the artificial intelligence model can be improved.

In the foregoing embodiments provided in this application, the method provided in embodiments of this application is described from a perspective of interaction between devices. To implement the functions in the method provided in embodiments of this application, the access network device or the terminal device may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraint conditions that are of the technical solutions.

In embodiments of this application, division of modules is an example, and is merely a logical function division. In an actual implementation, there may be another division manner. In addition, functional modules in embodiments of this application may be integrated into one processor, or may exist alone physically, or two or more modules may be integrated into one module. The integrated module may be implemented in a form of hardware, or may be implemented in a form of a software functional module.

Same as the foregoing concept, as shown in FIG. 7, an embodiment of this application further provides a communication apparatus 700, configured to implement a function of the access network device or the terminal device in the foregoing method. A form of the communication apparatus is not limited, and may be a hardware structure, a software module, or a combination of the hardware structure and the software module. For example, the apparatus may be the software module or a chip system. In this embodiment of this application, the chip system may include a chip, or may include the chip and another discrete component. The apparatus 700 may include: a processing unit 701 and a communication unit 702.

In this embodiment of this application, a communication unit may also be referred to as a transceiver unit, and may include a sending unit and/or a receiving unit. The sending unit and the receiving unit are respectively configured to perform a sending step and a receiving step of the access network device, the AI entity, or the terminal device in the foregoing method embodiments.

With reference to FIG. 7 and FIG. 8, the following describes in detail the communication apparatus provided in this embodiment of this application. It should be understood that descriptions of apparatus embodiments correspond to the descriptions of the method embodiments. Therefore, for content that is not described in detail, refer to the foregoing method embodiments. For brevity, details are not described herein again.

The communication unit may also be referred to as a transceiver apparatus. A processing unit may also be referred to as a processing module, a processing apparatus, or the like. Optionally, a component that is in the communication unit 702 and that is configured to implement a receiving function may be considered as the receiving unit, and a component that is in the communication unit 702 and that is configured to implement a sending function may be considered as the sending unit. That is, the communication unit 702 includes the receiving unit and the sending unit. The communication unit may sometimes be implemented as a pin, a transceiver machine, a transceiver, a transceiver circuit, or the like. The processing unit may sometimes be implemented as a processor, a processing board, or the like. The receiving unit sometimes may also be referred to as a pin, a receiver machine, a receiver, a receiver circuit, or the like. The sending unit sometimes may also be referred to as a pin, a transmitter machine, a transmitter, a transmitter circuit, or the like.

When the communication apparatus 700 performs functions of the access network device in the procedure shown in FIG. 5 in the foregoing embodiment,
the processing unit is configured to obtain N pieces of training data by using the communication unit. For one of the N pieces of training data, the training data corresponds to one piece of mark information. The mark information indicates an attribute of the training data, and N is an integer greater than 0.

The processing unit is configured to send indication information to a terminal device by using the communication unit. The indication information indicates information about M artificial intelligence models. For one of the M artificial intelligence models, the artificial intelligence model is trained based on X pieces of training data in the N pieces of training data. The X pieces of training data are determined based on the mark information, and M and X are integers greater than 0.

In a possible implementation, for the one of the M artificial intelligence models, the artificial intelligence model corresponds to one training condition, and mark information corresponding to the X pieces of training data meets the training condition corresponding to the artificial intelligence model.

In a possible implementation, the mark information indicates at least one of the following attributes:

an index of a synchronization signal block associated with the training data;
reference signal received power of the synchronization signal block associated with the training data;
a type of a wireless channel associated with the training data, where the type includes line of sight and non-line of sight;
a timing advance associated with the training data; and
a cell identifier of a cell associated with the training data.

In a possible implementation, the training condition includes at least one of the following: the index of the synchronization signal block; a value range of the reference signal received power; the type of the wireless channel; a value range of the timing advance; and the cell identifier.

In a possible implementation, the training condition corresponding to the artificial intelligence model is preset.

In a possible implementation, the training condition corresponding to the artificial intelligence model is determined based on the X pieces of training data used for training the artificial intelligence model, and the X pieces of training data used for training the artificial intelligence model are training data that is in the N pieces of training data and that has a same clustering feature, or the X pieces of training data used for training the artificial intelligence model are training data that is in the N pieces of training data and whose clustering features are within a same range.

In a possible implementation, the communication unit is further configured to: send, to the terminal device, M training conditions corresponding to the M artificial intelligence models, where the M artificial intelligence models are in one-to-one correspondence with the M training conditions.

In a possible implementation, the communication unit is further configured to: receive model indication information from the terminal device, where the model indication information indicates an artificial intelligence model requested by the terminal device; and send the indication information to the terminal device, where the indication information indicates information about the artificial intelligence model requested by the terminal device.

When the communication apparatus 700 performs functions of the terminal device in the procedure shown in FIG. 5 in the foregoing embodiment,

the communication unit is configured to receive indication information. The indication information indicates information about M artificial intelligence models. For one of the M artificial intelligence models, the artificial intelligence model is trained based on X pieces of training data in N pieces of training data, and M, N, and X are integers greater than 0.

In a possible implementation, for one of the N pieces of training data, the training data corresponds to one piece of mark information, and the mark information indicates an attribute of the training data.

In a possible implementation, for the one of the M artificial intelligence models, the artificial intelligence model corresponds to one training condition, and mark information corresponding to the X pieces of training data meets the training condition corresponding to the artificial intelligence model.

In a possible implementation, the mark information indicates at least one of the following attributes:

an index of a synchronization signal block associated with the training data;
reference signal received power of the synchronization signal block associated with the training data;
a type of a wireless channel associated with the training data, where the type includes line of sight and non-line of sight;
a timing advance associated with the training data; and
a cell identifier of a cell associated with the training data.

In a possible implementation, the training condition includes at least one of the following: the index of the synchronization signal block; a value range of the reference signal received power; the type of the wireless channel; a value range of the timing advance; and the cell identifier.

In a possible implementation, the training condition corresponding to the artificial intelligence model is preset.

In a possible implementation, the training condition corresponding to the artificial intelligence model is determined based on the X pieces of training data used for training the artificial intelligence model, and the X pieces of training data used for training the artificial intelligence model are training data that is in the N pieces of training data and that has a same clustering feature, or the X pieces of training data used for training the artificial intelligence model are training data that is in the N pieces of training data and whose clustering features are within a same range.

In a possible implementation, the communication unit is further configured to: receive M training conditions corresponding to the M artificial intelligence models, where the M artificial intelligence models are in one-to-one correspondence with the M training conditions.

In a possible implementation, the communication unit is further configured to: send model indication information, where the model indication information indicates an artificial intelligence model requested by the terminal device; and receive the indication information, where the indication information indicates information about the artificial intelligence model requested by the terminal device.

The foregoing is merely an example. The processing unit 701 and the communication unit 702 may further perform other functions. For more detailed descriptions, refer to the related descriptions in the method embodiment shown in FIG. 5. Details are not described herein again.

FIG. 8 shows an apparatus 800 provided in an embodiment of this application. The apparatus shown in FIG. 8 may be implemented by a hardware circuit of the apparatus shown in FIG. 7. The communication apparatus is applicable to the foregoing flowchart, and performs the functions of the terminal device or the access network device in the foregoing method embodiments. For ease of description, FIG. 8 shows only main components of the communication apparatus.

As shown in FIG. 8, a communication apparatus 800 includes a processor 810 and an interface circuit 820. The processor 810 and the interface circuit 820 are coupled to each other. It may be understood that the interface circuit 820 may be a transceiver, a pin, an interface circuit, or an input/output interface. Optionally, the communication apparatus 800 may further include a memory 830, configured to store instructions executed by the processor 810, store input data required by the processor 810 to run the instructions, or store data generated after the processor 810 runs the instructions. Optionally, a part or all of the memory 830 may be located in the processor 810.

When the communication apparatus 800 is configured to implement the method shown in FIG. 5, the processor 810 is configured to implement the function of the processing unit 701, and the interface circuit 820 is configured to implement the function of the communication unit 702.

When the communication apparatus is a chip used in a terminal device, the chip in the terminal device implements the functions of the terminal device in the foregoing method embodiments. The chip in the terminal device receives information from another module (for example, a radio frequency module or an antenna) in the terminal device, where the information is sent by an access network device to the terminal device. Alternatively, the chip in the terminal device sends information to another module (for example, a radio frequency module or an antenna) in the terminal device, where the information is sent by the terminal device to an access network device.

When the communication apparatus is a chip used in an access network device, the chip in the access network device implements the functions of the access network device in the foregoing method embodiments. The chip in the access network device receives information from another module (for example, a radio frequency module or an antenna) in the access network device, where the information is sent by a terminal device to the access network device. Alternatively, the chip in the access network device sends information to another module (for example, a radio frequency module or an antenna) in the access network device, where the information is sent by the access network device to a terminal device.

As described above, in the method in FIG. 5, the interaction between the access network device and the terminal device is used as an example. When the AI entity is located outside the access network device and is an independent module or network element, the access network device may forward the N pieces of training data to the AI entity, and the AI entity performs artificial intelligence model training. The AI entity may indicate information about a trained artificial intelligence model to the access network device, and then the access network device indicates the information about the trained artificial intelligence model to the terminal device. Other processes are similar to the procedure in FIG. 5. Therefore, the foregoing descriptions of the access network device may be applied to the AI entity.

It may be understood that the processor in the present disclosure may be a central processing unit, another general-purpose processor, a digital signal processor, an application-specific integrated circuit, another programmable logic device, a transistor logic device, a hardware component, or any combination thereof. The general-purpose processor may be a microprocessor, or may be any regular processor.

The memory in this the present disclosure may be a random access memory, a flash memory, a read-only memory, a programmable read-only memory, an erasable programmable read-only memory, an electrically erasable programmable read-only memory, a register, a hard disk drive, a removable hard disk drive, or a storage medium of any other form well-known in the art.

A person skilled in the art may understand that the present disclosure may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used for implementing each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that instructions executed by a computer or the processor of the another programmable data processing device generate an apparatus used for implementing a specific function in one or more processes in the flowcharts and/or in one or more blocks in the block diagrams.

Alternatively, the computer program instructions may be stored in a computer-readable memory that can instruct a computer or another programmable data processing device to work in a specific manner, so that instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art may make various modifications and variations to the present disclosure without departing from the scope of the present disclosure. In this way, the present disclosure is intended to cover these modifications and variations that are of the present disclosure provided that they fall within the scope defined by the following claims of the present disclosure and their equivalent technologies.

## Claims

1. A communication method, comprising:

   obtaining N pieces of training data, wherein for one of the N pieces of training data, the training data corresponds to one piece of mark information, the mark information indicates an attribute of the training data, and N is an integer greater than 0; and
   sending indication information to a terminal device, wherein the indication information indicates information about M artificial intelligence models, for one of the M artificial intelligence models, the artificial intelligence model is trained based on X pieces of training data in the N pieces of training data, the X pieces of training data are determined based on the mark information, and M and X are integers greater than 0.

2. The method according to claim 1, wherein for the one of the M artificial intelligence models, the artificial intelligence model corresponds to one training condition, and mark information corresponding to the X pieces of training data meets the training condition corresponding to the artificial intelligence model.

3. The method according to claim 1 or 2, wherein the mark information indicates at least one of the following attributes:

an index of a synchronization signal block associated with the training data;
reference signal received power of the synchronization signal block associated with the training data;
a type of a wireless channel associated with the training data, wherein the type comprises line of sight and non-line of sight;
a timing advance associated with the training data; or
a cell identifier of a cell associated with the training data.

4. The method according to claim 2 or 3, wherein the training condition comprises at least one of the following:

the index of the synchronization signal block;
a value range of the reference signal received power;
the type of the wireless channel;
a value range of the timing advance; or
the cell identifier.

5. The method according to any one of claims 2 to 4, wherein the training condition corresponding to the artificial intelligence model is preset.

6. The method according to any one of claims 2 to 4, wherein the training condition corresponding to the artificial intelligence model is determined based on the X pieces of training data used for training the artificial intelligence model, and the X pieces of training data used for training the artificial intelligence model are training data that is in the N pieces of training data and that has a same clustering feature, or the X pieces of training data used for training the artificial intelligence model are training data that is in the N pieces of training data and whose clustering features are within a same range.

7. The method according to any one of claims 2 to 6, wherein the method further comprises:
sending, to the terminal device, M training conditions corresponding to the M artificial intelligence models, wherein the M artificial intelligence models are in one-to-one correspondence with the M training conditions.

8. The method according to any one of claims 1 to 7, wherein the sending indication information to a terminal device comprises:

receiving model indication information from the terminal device, wherein the model indication information indicates an artificial intelligence model requested by the terminal device; and
sending the indication information to the terminal device, wherein the indication information indicates information about the artificial intelligence model requested by the terminal device.

9. A communication method, comprising:
receiving indication information, wherein the indication information indicates information about M artificial intelligence models, for one of the M artificial intelligence models, the artificial intelligence model is trained based on X pieces of training data in N pieces of training data, and M, N, and X are integers greater than 0.

10. The method according to claim 9, wherein for one of the N pieces of training data, the training data corresponds to one piece of mark information, and the mark information indicates an attribute of the training data.

11. The method according to claim 9 or 10, wherein
for the one of the M artificial intelligence models, the artificial intelligence model corresponds to one training condition, and mark information corresponding to the X pieces of training data meets the training condition corresponding to the artificial intelligence model.

12. The method according to claim 10 or 11, wherein the mark information indicates at least one of the following attributes:

an index of a synchronization signal block associated with the training data;
reference signal received power of the synchronization signal block associated with the training data;
a type of a wireless channel associated with the training data, wherein the type comprises line of sight and non-line of sight;
a timing advance associated with the training data; or
a cell identifier of a cell associated with the training data.

13. The method according to claim 11 or 12, wherein the training condition comprises at least one of the following:

the index of the synchronization signal block;
a value range of the reference signal received power;
the type of the wireless channel;
a value range of the timing advance; or
the cell identifier.

14. The method according to any one of claims 11 to 13, wherein the training condition corresponding to the artificial intelligence model is preset.

15. The method according to any one of claims 11 to 14, wherein the training condition corresponding to the artificial intelligence model is determined based on the X pieces of training data used for training the artificial intelligence model, and the X pieces of training data used for training the artificial intelligence model are training data that is in the N pieces of training data and that has a same clustering feature, or the X pieces of training data used for training the artificial intelligence model are training data that is in the N pieces of training data and whose clustering features are within a same range.

16. The method according to any one of claims 11 to 15, wherein the method further comprises:
receiving M training conditions corresponding to the M artificial intelligence models, wherein the M artificial intelligence models are in one-to-one correspondence with the M training conditions.

17. The method according to any one of claims 9 to 16, wherein the receiving indication information comprises:

sending model indication information, wherein the model indication information indicates a requested artificial intelligence model; and
receiving the indication information, wherein the indication information indicates information about the requested artificial intelligence model.

18. A communication apparatus, configured to implement the method according to any one of claims 1 to 8, or configured to implement the method according to any one of claims 9 to 17.

19. A communication apparatus, comprising a processor and a memory, wherein the memory is coupled to the processor, and the processor is configured to perform the method according to any one of claims 1 to 8, or is configured to perform the method according to any one of claims 9 to 17.

20. A computer-readable storage medium, wherein the computer-readable storage medium is configured to store a computer program; and when the computer program is run on a computer, the computer is enabled to perform the method according to any one of claims 1 to 8, or the computer is enabled to perform the method according to any one of claims 9 to 17.

**FIG. 1**

**FIG. 2**

**FIG. 3**

FIG. 4(a)

FIG. 4(b)

FIG. 4(c)

FIG. 4(d)

Core network
device

AI entity

NG                          NG

CU                          CU                          OAM

AI entity    Xn    AI entity

F1                          F1

DU                          DU                          AI entity

AI entity                   AI entity

## FIG. 4(e)

Access network
device

Terminal
device

S501: The access network device
obtains N pieces of training data

S502: The access network device
sends indication information to the
terminal device, and
correspondingly, the terminal device
receives the indication information
from the access network device

Indication information

## FIG. 5

FIG. 6

FIG. 7

FIG. 8

## INTERNATIONAL SEARCH REPORT

| International application No. |
|---|
| **PCT/CN2022/126467** |

### A. CLASSIFICATION OF SUBJECT MATTER

H04L 5/00(2006.01)i; G06N 3/08(2023.01)n

According to International Patent Classification (IPC) or to both national classification and IPC

### B. FIELDS SEARCHED

Minimum documentation searched (classification system followed by classification symbols)

H04L; G06N

Documentation searched other than minimum documentation to the extent that such documents are included in the fields searched

Electronic data base consulted during the international search (name of data base and, where practicable, search terms used)

CNTXT, WPABS, WPABSC, ENTXT, ENTXTC, DWPI, VEN, CJFD, 3GPP: 人工智能, 机器学习, 神经网络, 同步信号块, 参考信号接收功率, 定时提前, 视距, 视线, 小区标识, 训练, artificial intelligence, AI, machine learning, neural network, SSB, RSRP, time advance, TA, LOS, cell ID

### C. DOCUMENTS CONSIDERED TO BE RELEVANT

| Category* | Citation of document, with indication, where appropriate, of the relevant passages | Relevant to claim No. |
|---|---|---|
| X | WO 2021177867 A1 (TELEFONAKTIEBOLAGET LM ERICSSON (PUBL)) 10 September 2021 (2021-09-10) description, page 6, line 11 to page 18, line 7 | 1-20 |
| A | CN 113169887 A (NOKIA TECHNOLOGIES OY) 23 July 2021 (2021-07-23) entire document | 1-20 |
| A | US 2021084601 A1 (MOVANDI CORPORATION) 18 March 2021 (2021-03-18) entire document | 1-20 |
| A | WO 2020214168 A1 (NOKIA TECHNOLOGIES OY et al.) 22 October 2020 (2020-10-22) entire document | 1-20 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 January 2023** | **10 January 2023** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/126467**

| Patent document cited in search report | | | Publication date (day/month/year) | Patent family member(s) | | | Publication date (day/month/year) |
|---|---|---|---|---|---|---|---|
| WO | 2021177867 | A1 | 10 September 2021 | None | | | |
| CN | 113169887 | A | 23 July 2021 | None | | | |
| US | 2021084601 | A1 | 18 March 2021 | US | 2021258899 | A1 | 19 August 2021 |
| WO | 2020214168 | A1 | 22 October 2020 | US | 2022190883 | A1 | 16 June 2022 |
| | | | | EP | 3956992 | A1 | 23 February 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111227090